# EUROPÄISCHE PATENTSCHRIFT

(11) **EP 1 900 773 B1**
(45) Veröffentlichungstag und Bekanntmachung des Hinweises auf die Patenterteilung: **01.07.2009**
(21) Anmeldenummer: 07114425.7
(22) Anmeldetag: 16.08.2007
(51) Int. Cl.: C08L 51/06, C09D 5/00, C09D 151/06, C09D 161/02, C09D 161/24, C08K 5/01, C08L 61/02, C08L 61/24, C08L 61/32

(54) **Silangruppenhaltige, chlorfreie Zusammensetzung**
Chlorine-free composition containing silane groups
Composition sans chlore contenant des groupes silane

(30) Priorität: 15.09.2006 DE 102006044143
(43) Veröffentlichungstag der Anmeldung: 19.03.2008
(73) Patentinhaber: Evonik Degussa GmbH, 45128 Essen (DE)
(72) Erfinder: Glöckner, Patrick, 45721, Haltern am See (DE); Mindach, Lutz, 44797, Bochum (DE); Becker, Hinnerk Gordon, 45289, Essen (DE)

(56) Entgegenhaltungen:
- WO-A-20/04078365
- JP-A- 5 149 479
- JP-A- 2002 053 791
- US-A1- 2003 055 163

## Beschreibung

Die vorliegende Erfindung betrifft Zusammensetzungen aus A) silangepfropften, weitgehend amorphen Poly-α-olefinen, die kein organisch gebundenes Chlor enthalten und eine Schmelzenthalpie im Bereich von 0 bis 80 J/g aufweisen, B) Keton-, Keton/Aldehyd- und/oder Harnstoff/Aldehyd-Harzen und/oder deren hydrierten Folgeprodukten, C) Lösemitteln und D) gegebenenfalls Hilfs- und/oder Zusatzstoffen und deren Verwendung als Primer zur Verbesserung der Haftung von Beschichtungsstoffen wie beispielsweise Farben, Lacken, Kleb- und Dichtstoffen, Tinten sowie Druckfarben auf Kunststoffen, Holz, Papier, Metallen, Glas, Keramik und Beton.

Es ist bekannt, dass Ketone oder Gemische aus Ketonen und Aldehyden in Gegenwart basischer Katalysatoren oder Säuren zu harzartigen Produkten umgesetzt werden können. So lassen sich aus Gemischen von Cyclohexanon und Methylcyclohexanon Harze herstellen (Ullmann Bd. 12, S. 551). Die Reaktion von Ketonen und Aldehyden führt zumeist zu Hartharzen, die oft in der Lackindustrie Verwendung finden.

Technisch bedeutende Keton-Aldehydharze werden heute zumeist unter Verwendung von Formaldehyd hergestellt.

Keton-Formaldehydharze sind bereits seit langem bekannt. Verfahren zur Herstellung sind z. B. beschrieben in DE 102006009080.2 sowie in den dort zitierten Patenten.

Zur Herstellung werden normalerweise Ketone und Formaldehyd in Gegenwart von Basen miteinander zur Reaktion gebracht.

Keton-, Keton/Aldehyd- und/oder Harnstoff/Aldehyd-Harzen und deren hydrierte Folgeprodukte werden in Beschichtungsstoffen z. B. als filmbildende Zusatzkomponenten eingesetzt, um bestimmte Eigenschaften wie Antrocknungsgeschwindigkeit, Glanz, Härte oder Kratzfestigkeit zu verbessern. Wegen ihres relativ geringen Molekulargewichtes besitzen übliche Keton-, Keton/Aldehyd- und/oder Harnstoff/Aldehyd-Harzen und/oder deren hydrierte Folgeprodukte eine geringe Schmelz- und Lösungsviskosität und dienen daher in Beschichtungsstoffen u. a. als filmbildende Funktionsfüllstoffe.

Die Carbonylgruppen der Keton-Aldehydharze unterliegen durch z. B. Bestrahlung mit z. B. Sonnenlicht klassischen Abbaureaktionen wie z. B. vom Norrish-Typ I oder II.

Die Verwendung nicht modifizierter Keton-Aldehyd- oder Ketonharze ist daher für qualitativ hochwertige Anwendungen z. B. im Außenbereich, bei dem hohe Beständigkeits-eigenschaften insbesondere gegenüber Bewitterung und Hitze erforderlich sind, nicht möglich. Diese Nachteile können durch Hydrierung der Carbonylgruppen verbessert werden. Die Umwandlung der Carbonylgruppen in sekundäre Alkohole durch Hydrierung von Keton-Aldehydharzen wird seit langem praktiziert (DE 870 022).

Die Herstellung carbonyl- und kernhydrierter Keton-Aldehydharze auf Basis von Ketonen, die aromatische Gruppen enthalten, ist ebenfalls möglich. Solche Harze werden in DE 102006026758.3 oder DE 12006026760.5 beschrieben.

Die Herstellung und Verwendung silangepfropfter, weitgehend amorpher Poly-α-olefine sind bereits lange bekannt. Sie werden z. B. in der EP 827 994 und DE-OS 40 00 695 beschrieben.

In keiner dieser Anmeldungen wird auf die Verwendung von Primer-Zusammensetzungen auf Basis silangepfropfter, weitgehend amorpher Poly-α-olefine, die kein organisch gebundenes Chlor enthalten und Keton-, Keton/Aldehyd- und/oder Harnstoff/Aldehyd-Harzen und/oder deren hydrierten Folgeprodukten hingewiesen, die eine sehr gute Haftung von Beschichtungsstoffen z. B. auf unvorbehandelten Kunststoffen ermöglichen.

Zur Beschichtung unpolarer Kunststoffe werden diese üblicherweise vorbehandelt, um eine ausreichend hohe Haftung der Beschichtung auf dem Kunststoff zu erhalten. So werden z. B. Kunststoffe aus Polyolefinen wie z. B. aus Polypropylen (PP), modifiziertem Polypropylen (z. B. Polypropylen-ethylen-Copolymere), Polyethylen (PE), modifiziertem PE, Mischungen wie z. B. Polypropylen/Ethylen-Propylen-Dien-Blends (PP/EPDM) mit geringem EPDM-Gehalt, PP/PE-Blends oder spezielle Polyester durch bestimmte Methoden vorbehandelt, damit der Beschichtungsstoff auf dem Kunststoff haftet. Typische Methoden sind das Beflammen, die Corona-Entladung, die Gasphasenfluorierung oder die Plasma-Behandlung. Durch diese Methoden wird die Kunststoffoberfläche partiell oxidiert, so dass die Oberflächenspannung ansteigt. Hierdurch können nachfolgende Beschichtungen oder Verklebungen zu dem Substrat intermolekulare Wechselwirkungen bilden, wodurch die Haftung verbessert wird. Die Nachteile dieser Methoden liegen in den hohen Kosten und darin begründet, dass die Wirkung der Vorbehandlung über einen relativ geringen Zeitraum nachlässt (wenige Tage bis Wochen). Außerdem neigen Korona-vorbehandelte Kunststoffe zur Verblockung, so dass diese Vorbehandlungsmethode prinzipiell nur *inline* zu der Applikation des Beschichtungsstoffes erfolgen kann.

Andere Methoden, wie z. B. die Zugabe von Zuschlagstoffen zur Verbesserung der Haftung während der Herstellung des Kunststoffes sind ebenfalls möglich. Die Nachteile solcher Methoden liegen in den relativ hohen Kosten und darin begründet, dass die niedermolekulareren Zuschlagstoffe Probleme bei der Herstellung des Kunststoffes bereiten und die physikalischen Eigenschaften wie z. B. die mechanischen Festigkeiten negativ beeinflussen können.

Eine andere Möglichkeit der Vorbehandlung bietet die Applikation von Primern auf den Kunststoff vor der Applikation des Beschichtungsstoffes.

In US 2003/055163 werden Bindemittelzusammensetzungen beschrieben, die u. a. chlorinierte, COOH-haltige Polyolefine und Ketonharze enthalten.

In JP 46027878 werden ebenfalls Zusammensetzungen beschrieben, die neben Ketonharzen, chlorinierte Polyolefine enthalten.

Produkte, die organisch gebundenes Chlor enthalten, können Salzsäure abspalten und bei deren Verbrennung z. B. hochtoxische Dioxine bilden. Daher sind derartige Methoden aus Gründen des Arbeits- und Umweltschutzes nicht zu empfehlen.

In WO2004/078365 werden Primer auf Basis silanmodifizierter Polyolefine beschrieben. Aufgrund der geringen Glasübergangstemperatur der Polyolefine und der geringen Kristallinität resultieren unvorteilhaft eine langsame Antrocknung und eine geringe Blockfestigkeit. Dies bedeutet, dass auf der einen Seite die Produktivität bei einer kontinuierlichen Verarbeitung (z. B. bei Druckfarben oder Bandbeschichtungen) aufgrund der langsamen Antrocknung gering ist. Auf der anderen Seite ist eine Off-line-Beschichtung des Substrates mit dem Primer und eine weitere Beschichtung mit der Druckfarbe oder dem Lack zu einem späteren Zeitpunkt wegen der mangelhaften Blockfestigkeit nicht möglich, da es wegen der geringen Blockfestigkeit zu einem Verkleben kommt. Wie den Beispielen der WO2004/078365 zu entnehmen ist, ist eine gute Haftung nur zu erhalten, wenn die beschichteten Substrate einer höheren Temperatur ausgesetzt werden. Dies ist für thermisch labile Substrate nicht möglich.

Die Aufgabe der vorliegenden Erfindung bestand darin, Zusammensetzungen auf Basis von Poly-α-olefinen und Keton-, Keton/Aldehyd- und/oder Harnstoff/Aldehyd-Harzen und/oder deren hydrierten Folgeprodukten zu finden, die insbesondere eine sehr gute Haftung von Beschichtungsstoffen auf unvorbehandelten Kunststoffen bereits bei Raumtemperatur ermöglichen. Die Zusammensetzungen sollten frei von Chlor sein und eine schnelle Antrocknung sowie eine hohe Blockfestigkeit aufweisen. Die Wirkung der Vorbehandlung sollte auch über einen langen Zeitraum bestehen bleiben, so dass wahlweise eine Vorbehandlung direkt nach der Herstellung des Kunststoffes beim Kunststoffhersteller (Off-line) oder aber eine Vorbehandlung direkt vor der Applikation des Beschichtungsstoffes (In-line) möglich ist. Darüber hinaus sollte die Haftfestigkeit zum Untergrund und zu nachfolgenden Schichten auch bei hoher Temperatur gegeben sein.

Die der Erfindung zugrunde liegende Aufgabe wird überraschend gemäß den Patentansprüchen gelöst, indem vor Applikation des Beschichtungsstoffes Zusammensetzungen auf Basis von silangepfropften, weitgehend amorphen Poly-α-olefinen und Keton-, Keton/Aldehyd- und/oder Harnstoff/Aldehyd-Harzen und/oder deren hydrierten Folgeprodukten auf das Substrat aufgetragen werden, die im Folgenden näher beschrieben werden.

Die erfindungsgemäßen Zusammensetzungen sind im Gegensatz zum Stand der Technik frei von organisch gebundenem Chlor. Sie weisen eine schnelle Antrocknung sowie eine hohe Blockfestigkeit auf. Die Wirkung der Vorbehandlung ist auch über einen langen Zeitraum konstant.

Die erfindungsgemäßen Zusammensetzungen können daher, insbesondere zur Verbesserung der Haftung von Beschichtungsstoffen auf Kunststoffen verwendet werden. Dabei ist die Haftung auch bei Temperaturbelastung gegeben.

Gegenstand der vorliegenden Erfindung sind Zusammensetzungen, die kein organisch gebundenes Chlor enthalten, im Wesentlichen enthaltend
A) 1 bis 98 Gew.-% mindestens eines silangepfropften, weitgehend amorphen Poly-α-olefins, das kein organisch gebundenes Chlor enthält und eine Schmelzenthalpie im Bereich von 0 bis 80 J/g aufweist
   und
B) 1 bis 98 Gew.-% mindestens eines Keton-, Keton/Aldehyd- und/oder Harnstoff/Aldehyd-Harzes und/oder deren hydrierten Folgeprodukten
   und
C) 1 bis 98 Gew.-% mindestens eines Lösemittels und gegebenenfalls
D) bis zu 97 Gew.-% mindestens eines Hilfs- oder Zusatzstoffes,
wobei die Summe der Gewichtsangaben der Komponenten A) bis D) 100 Gew.-% beträgt.

Es wurde gefunden, dass die Kombination der im Folgenden beschriebenen Zusammensetzungen aus den Komponenten A) bis D) alle geforderten Kriterien erfüllen.

### Komponente A)

Die erfindungswesentliche Komponente A) wird in Mengen von 1 bis 98 Gew.-%, bevorzugt von 1 bis 49 Gew.-%, besonders bevorzugt 1 bis 40 Gew.-% eingesetzt.

Zur Herstellung der silangepfropften, weitgehend amorphen Poly-α-olefine, die kein organisch gebundenes Chlor enthalten und eine Schmelzenthalpie im Bereich von 0 bis 80 J/g aufweisen, werden ungesättigte Silane auf die weitgehend amorphen Polyolefine aufgepfropft.

Als weitgehend amorphe Poly-α-olefine können beispielsweise Homopolymere, wie z. B. ataktisches Polypropylen (APP) oder ataktisches Polybuten-(1) verwendet werden oder vorzugsweise Co- und/oder Terpolymere mit folgender Monomerzusammensetzung:
0 bis 95 Gew.-%, bevorzugt 3 bis 95 Gew.-% eines oder mehrerer α-Olefine mit 4 bis 20 Kohlenstoffatomen,
5 bis 100 Gew.-%, bevorzugt 5 bis 97 Gew.-% Propen und
0 bis 50 Gew.-%, bevorzugt 0 bis 20 Gew.-% Ethen.

Als α-Olefin mit 4 bis 20 Kohlenstoffatomen werden bevorzugt 1-Buten, 1-Penten, 1-Hexen, 1-Octen, 1-Decen, 1-Dodecen, 1-Octadecen, 3-Methyl-1-buten, ein Methylpenten wie z. B. 4-Methyl-1-penten, ein Methylhexen oder ein Methylhepten, allein oder in Mischung, eingesetzt.

Die Herstellung derartiger Polymere ist z. B. in der EP-A-0 023 249 beschrieben.

Diese nicht modifizierten, weitgehend amorphen Poly-α-olefine besitzen eine Schmelzenthalpie im Bereich von 0 bis 80 J/g, bevorzugt im Bereich von 1 bis 70 J/g, besonders bevorzugt im Bereich von 1 bis 60 J/g .

Die Schmelzenthalpie ist ein Maß für die Kristallinität des Polymeren. Die Poly-α-olefine weisen eine relativ geringe Kristallinität auf, d. h. sie sind weitgehend, jedoch nicht vollständig, amorph. Es ist eine gewisse Kristallinität vorhanden, die für die geforderten Materialeigenschaften unabdingbar ist. Die beim Aufschmelzen detektierbaren kristallinen Bereiche erstrecken sich über einen großen Temperaturbereich von 0 bis 175°C und sind von ihrer Intensität her je nach Lage unterschiedlich ausgeprägt. Die Poly-α-olefine zeichnen sich in ihrer Kristallinität durch das Auftreten sowohl mono- als auch bi- und multimodaler Aufschmelzpeaks aus, die zum Teil scharf getrennt sind, zum Teil ineinander übergehen. Die Schmelzenthalpie (als Maßstab für die Gesamtkristallinität) der Polymere liegt zwischen 0 J/g und 80 J/g, bevorzugt im Bereich von 1 bis 70 J/g, besonders bevorzugt im Bereich von 1 bis 60 J/g.

Durch die niedrige Kristallinität kann einerseits eine hohe Transparenz, andererseits ein flexibles mechanisches Verhalten erhalten werden. Durch eine höhere Kristallinität kann aber auf der anderen Seite eine besondere Kombination vorteilhafter Materialeigenschaften erzielt werden. Erfindungsgemäße Polymere mit relativ hohen Kristallinitäten, wie z. B. Polybuten bzw. Buten-Copolymere mit hohen Butenanteilen, weisen z. B. sehr gute Zugfestigkeiten auf. Gleichzeitig zeigen sie eine relativ geringe Oberflächenklebrigkeit.

Die Bestimmung der Schmelzenthalpie des kristallinen Anteils erfolgt über Differentialkalorimetrie (DSC) gemäß DIN 53 765 aus der 2. Aufheizkurve bei einer Heizrate von 10 K/min.

Das aufzupfropfende Silan besitzt vorzugsweise drei direkt mit dem Silicium verbundene Alkoxygruppen. Als Beispiele seien Vinyltrimethoxysilan (VTMO), Vinyltriethoxysilan, Vinyl-tris(2-methoxy-ethoxy)silan, 3-Methacryloxypropyltrimethoxysilan (MEMO), 3-Methacryloxy-propyltriethoxysilan, Vinyldimethylmethoxysilan oder Vinylmethyldibutoxysilan genannt. Das Silan wird bei der Pfropfung üblicherweise in Mengen zwischen 0,1 und 10 Gew.-%, vorzugsweise zwischen 0,5 und 5 Gew.-% bezogen auf das Polyolefin eingesetzt.

Zur Herstellung der silangepfropften, weitgehend amorphen Poly-α-olefine, die kein organisch gebundenes Chlor enthalten und eine Schmelzenthalpie im Bereich von 0 bis 80 J/g aufweisen, werden die ungesättigten Silane nach allen Methoden des Standes der Technik beispielsweise in Lösung oder bevorzugt in der Schmelze auf die weitgehend amorphen Polyolefine aufgepfropft, wobei ein Radikalspender in ausreichender Menge vorhanden ist. Eine geeignete Arbeitsweise kann der DE-OS 40 00 695 entnommen werden.

Die silangepfropften, weitgehend amorphen Poly-α-olefine, die kein organisch gebundenes Chlor enthalten, besitzen im nicht vernetzten Zustand folgende Eigenschaften:
- ein gewichtsmittleres Molekulargewicht von 2 000 bis 250 000 g/mol, bevorzugt 3 000 bis 150 000 g/mol, besonders bevorzugt 3 000 bis 125 000 g/mol,
- eine Polydispersität PD von 2,0 bis 40, bevorzugt 2,5 bis 20, besonders bevorzugt 2,5 bis 15,
- eine Glasübergangstemperatur Tg von -80 bis 0 °C, bevorzugt -60 bis 0 °C, besonders bevorzugt -55 bis -10°C,
- eine Schmelzenthalpie im Bereich von 0 bis 80 J/g, bevorzugt im Bereich von 1 bis 60 J/g, besonders bevorzugt im Bereich von 1 bis 40 J/g sowie
- eine weitgehende Löslichkeit und/oder Quellbarkeit in unpolaren Lösemitteln.

Dabei können die Eigenschaften alle möglichen Variationen innerhalb der oben genannten Werte annehmen, z. B. eine PD von 2,5 bis 15 (kleinster Bereich) und ein Tg von -80 bis 0 °C (größter Bereich).

Die Bestimmung des Molekulargewichts und der Polydispersität erfolgt über Hochtemperatur-GPC. Die Bestimmung wird gemäß ASTM D6474-99 durchgeführt, jedoch bei einer höheren Temperatur (160 °C statt 140 °C) sowie einem geringeren Injektionsvolumen von 150 µl statt 300 µl. Als Lösungsmittel wird Trichlorbenzol verwendet. Die Messung erfolgt bei einer Säulentemperatur von 160 °C. Die dabei für die Auswertung der Elutionskurven verwendete universelle Kalibrierung wird auf Basis von Polyolefin-Standards durchgeführt. Die Ergebnisse sind nicht mit Messungen vergleichbar, deren Kalibrierungen auf Basis von artfremden Polymeren - z. B. auf Polystyrol-Basis - erfolgte, oder die ohne universelle Kalibrierung erfolgt sind, da ansonsten ein unzulässiger Vergleich unterschiedlicher dreidimensionaler Polymerstrukturen bzw. hydrodynamischer Radien erfolgt. Auch der Vergleich mit Messungen, die andere als das angegebene Lösungsmittel verwenden, ist nicht zulässig, da in unterschiedlichen Lösungsmitteln unterschiedliche dreidimensionale Polymerstrukturen bzw. hydrodynamische Radien vorliegen können, die zu einem abweichenden Ergebnis bei der Molekulargewichtsbestimmung führen.

Die Polydispersität PD ist als Quotient von zahlenmittlerer und gewichtsmittlerer Molmasse definiert. Sie ist insbesondere ein Maß für die Breite der vorliegenden Molmassenverteilung, die wiederum Rückschlüsse auf das vorliegende Polymerisationsverhalten sowie den verwendeten Katalysator zulässt. Außerdem ist sie auch ein Maß für den vorhandenen niedermolekularen Anteil, der wiederum Einfluss auf die Haftungseigenschaften der Polymermaterialien hat. Die Polydispersität ist in gewissen Grenzen für eine bestimmte Katalysator-Cokatalysator-Kombination charakteristisch. Die Molmassenverteilung kann dabei je nach verwendeter Verfahrensweise (z. B. 1, 2 oder mehr Rührkessel bzw. Kombinationen aus Rührkessel und Strömungsrohr) bzw. Reaktionsführung (Einfach- bzw. Mehrfachdosierung von Katalysator, Cokatalysator und Monomeren) entweder mono-, bi- oder multimodal sein. Die Polydispersität hat einen relativ starken Einfluss auf die Klebrigkeit des Materials bei Raumtemperatur sowie auf die Haftung.

Darüber hinaus haben Molekulargewicht und die Polydispersität u. a. einen starken Einfluss auf Lösungsviskosität, mechanische Eigenschaften sowie Haftungseigenschaften. Je niedriger das Molekulargewicht ist, desto niedriger ist die Viskosität in Lösung. Allerdings können mechanische Eigenschaften bei geringem Molekulargewicht negativ beeinflusst sein. Zur Erzielung optimaler Eigenschaften liegt daher das gewichtsmittlere Molekulargewicht der Komponente A) zwischen 2 000 und 250 000 g/mol, bevorzugt zwischen 3 000 und 150 000 g/mol, besonders bevorzugt zwischen 3 000 und 125 000 g/mol und die Polydispersität zwischen 2,0 und 40, bevorzugt zwischen 2,5 und 20, besonders bevorzugt zwischen 2,5 und 15.

Die Bestimmung der Glasübergangstemperatur und des Schmelzbereichs des kristallinen Anteils erfolgt über Differentialkalorimetrie (DSC) gemäß DIN 53 765 aus der 2. Aufheizkurve bei einer Heizrate von 10 K/min. Der Wendepunkt der Wärmestromkurve wird als Glasübergangstemperatur ausgewertet. Die Glasübergangstemperatur lässt sich auf bekannte Weise über die Monomerzusammensetzung und die Reaktionsbedingungen steuern. Generell führt die Verwendung von längerkettigen Monomeren zu niedrigeren Glasübergangstemperaturen. Ebenso führen Reaktionsbedingungen, bei denen sich auch kürzerkettige Polymere bilden (beispielsweise relativ hohe Polymerisationstemperaturen) in einem bestimmten Rahmen ebenfalls zur Absenkung der Glasübergangstemperatur.

Eine niedrige Glasübergangstemperatur Tg wirkt sich positiv auf die (Tieftemperatur-)-Flexibilität, jedoch negativ auf die Blockfestigkeit und eine schnelle Antrocknungsgeschwindigkeit (Lösemittelretentionszeit) aus.
Daher wird die Tg der Komponente A) so gewählt, dass sie zwischen -80 und 0 °C, bevorzugt zwischen -60 und 0 °C, besonders bevorzugt zwischen -55 und -10°C liegt.
Die Schmelzenthalpie wird wie oben beschrieben ermittelt und liegt aus den oben beschriebenen Gründen im Bereich von 0 bis 80 J/g, bevorzugt im Bereich von 1 bis 60 J/g, besonders bevorzugt im Bereich von 1 bis 40 J/g.

Die Löslichkeit und/oder Quellbarkeit in unpolaren Lösemitteln ist erwünscht, damit die Komponente A) verarbeitet werden kann. Zum einen soll sie in Kombination mit den Komponenten B) bis D) homogen mischbar sein, zum anderen soll die Zusammensetzung aus A) bis D) mit gängigen Methoden, wie z. B. Spritzen, Drucken, Gießen, Streichen oder Auftragen mittels Schwamm, leicht applizierbar sein.

Die Löslichkeit wird bestimmt durch Lösen der Komponente A) in dem jeweiligen Lösemittel oder Lösemittelgemisch in 10 bzw. 50%iger Verdünnung unter Rühren bei Rückflusstemperatur und anschließendem Abkühlen der Lösung auf Raumtemperatur. Die Löslichkeit von Komponente A) in Xylol liegt zwischen 80 und 99,9 %, bevorzugt zwischen 85 und 99,5 % und besonders bevorzugt zwischen 90 und 99,0 %. Darüber hinaus ist die Komponente A) löslich in aromatischen Lösemitteln wie z. B. Toluol, Benzol, Kresolen, Naphthalin, Tetrahydronaphthalin und/oder in aliphatischen Lösemitteln und Lösemittelgemischen, wie Dekahydronaphthalin, Hexan, Heptan, Cyclohexan, Kristallölen, Testbenzinen, Terpentinen, Paraffinen allein oder in Mischung.

### Komponente B)

Die erfindungswesentliche Komponente B) wird in Mengen von 1 bis 98 Gew.-%, bevorzugt von 1 bis 49 Gew.-%, besonders bevorzugt 1 bis 40 Gew.-% eingesetzt.

Diese Produkte sind insbesondere für eine schnelle Antrocknungsgeschwindigkeit (verbesserte Lösemittelretention) und eine hohe Blockfestigkeit verantwortlich. Darüber hinaus wird durch den Einsatz der Komponenten B) die Verträglichkeit zu nachfolgenden Beschichtungsstoffen bei der Nass-in-nass-Applikation sowie die Haftung der nachfolgenden Beschichtungen auf der Primerschicht verbessert. Nicht zuletzt wird die Löslichkeit der Komponente A) der erfindungsgemäßen Zusammensetzung durch die Anwesenheit der Komponente B) gesteigert und der Verlauf sowie der Feststoffanteil verbessert.

Als Komponente B) geeignet sind Keton-, Keton/Aldehyd- und/oder Harnstoff/Aldehyd-Harze und deren hydrierten Folgeprodukte allein oder in Mischung.

Im Allgemeinen können alle in der Literatur für Keton- und Keton-Aldehyd-Harzsynthesen als geeignet genannte Ketone, in der Regel alle C-H-aciden Ketone, eingesetzt werden.

Als Ketone zur Herstellung der Keton- und Keton-Aldehyd-Harze (Komponente B)) eignen sich alle Ketone, insbesondere Aceton, Acetophenon, Methylethylketon, tert.-Butylmethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon, Cyclohexanon und alle alkylsubstituierten Cyclohexanone mit einem oder mehreren Alkylresten, die insgesamt 1 bis 8 Kohlenwasserstoffatome aufweisen, einzeln oder in Mischung. Als Beispiele alkylsubstituierter Cyclohexanone können 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon genannt werden.

Bevorzugt werden Keton-Aldehyd-Harze auf Basis der Ketone Acetophenon, Cyclohexanon, 4-tert.-Butylcyclohexanon, 3,3,5-Trimethylcyclohexanon und Heptanon, allein oder in Mischung sowie Ketonharze auf Basis von Cyclohexanon.

Als Aldehyd-Komponente der Keton-Aldehyd-Harze (Komponente B)) eignen sich prinzipiell unverzeigte oder verzweigte Aldehyde, wie z. B. Formaldehyd, Acetaldehyd, n-Butyraldehyd und/oder iso-Butyraldehyd, Valerianaldehyd sowie Dodecanal. Im Allgemeinen können alle in der Literatur für Ketonharzsynthesen als geeignet genannte Aldehyde eingesetzt werden. Bevorzugt wird jedoch Formaldehyd allein oder in Mischungen verwendet.

Das benötigte Formaldehyd wird üblicherweise als ca. 20 bis 40 Gew.-%ige wässrige oder alkoholische (z. B. Methanol oder Butanol) Lösung eingesetzt. Andere Einsatzformen des Formaldehyds wie z. B. auch die Verwendung von para-Formaldehyd oder Trioxan sind ebenfalls möglich. Prinzipiell eignen sich jedoch alle formaldehydspendenden Verbindungen. Aromatische Aldehyde, wie z. B. Benzaldehyd, können in Mischung mit Formaldehyd ebenfalls enthalten sein.

Besonders bevorzugt werden als Ausgangsverbindungen für die Keton-Aldehyd-Harze Acetophenon, Cyclohexanon, 4-tert.-Butylcyclohexanon, 3,3,5-Trimethylcyclohexanon sowie Heptanon allein oder in Mischung und Formaldehyd eingesetzt.

Das molare Verhältnis zwischen der Keton und der Aldehydkomponente liegt zwischen 1 : 0,25 bis 1 : 15, bevorzugt zwischen 1 : 0,9 bis 1 : 5 und besonders bevorzugt zwischen 1 : 0,95 bis 1 : 4.

Verfahren zur Herstellung der Keton-Aldehyd-Harze werden z. B. beschrieben in EP 1 486 520, DE 102006009079.9 und DE 102006009080.2 und der dort zitierten Literatur.

Als Komponente B) ebenfalls verwendet werden hydrierte Folgeprodukte der Harze aus Keton und Aldehyd. Die oben beschriebenen Keton-Aldehyd-Harze werden in Gegenwart eines Katalysators mit Wasserstoff bei Drücken von bis zu 300 bar hydriert. Dabei wird die Carbonylgruppe des Keton-Aldehydharzes in eine sekundäre Hydroxygruppe umgewandelt. Je nach Reaktionsbedingungen kann ein Teil der Hydroxygruppen abgespalten werden, so dass Methylengruppen resultieren. Zur Veranschaulichung dient folgendes Schema:

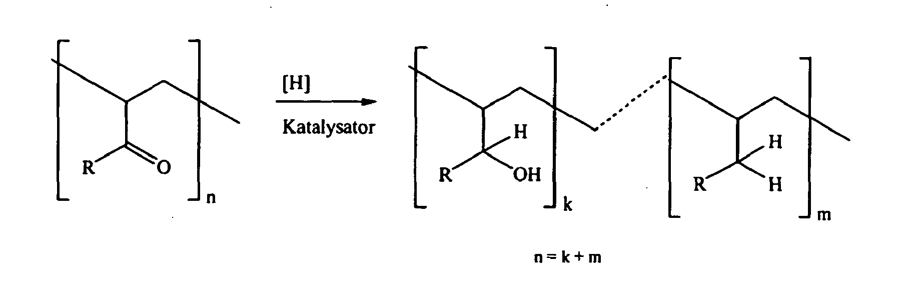

Verfahren zur Herstellung der hydrierten Produkte werden z. B. beschrieben in DE 102006009079.9 und DE 102006009080.2.

Im Falle von Ketonen, die aromatische Strukturelemente enthalten, werden je nach Hydrierbedingungen auch diese Strukturelemente hydriert. Geeignete Harze sind z. B. in DE 102006026760.5 und DE 102006026758.3 beschrieben.

Als Komponente B) werden weiterhin Harnstoff-Aldehyd-Harze unter Verwendung eines Harnstoffes der allgemeinen Formel (i) 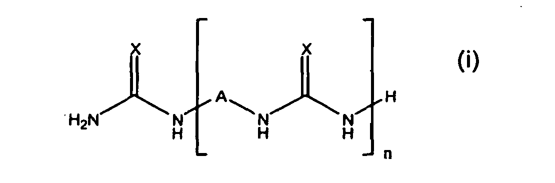 in der X Sauerstoff, A einen Alkylenrest bedeuten und n für 0 bis 3 steht, mit 1,9 (n + 1) bis 2,2 (n + 1) mol eines Aldehyds der allgemeinen Formel (ii) 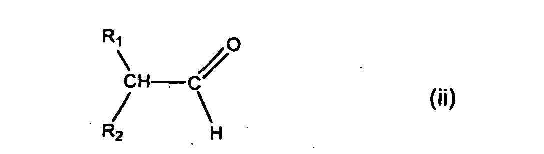 in der R₁ und R₂ für Kohlenwasserstoffreste (z. B. Alkyl-, Aryl- und/oder Alkylarylreste) mit jeweils bis zu 20 Kohlenstoffatomen stehen
und/oder Formaldehyd verwendet.

Geeignete Harnstoffe der allgemeinen Formel (i) mit n = 0 sind z. B. Harnstoff und Thioharnstoff, mit n = 1 Methylendiharnstoff, Ethylendiharnstoff, Tetramethylendiharnstoff und/oder Hexamethylendiharnstoff sowie deren Gemische. Bevorzugt ist Harnstoff.

Geeignete Aldehyde der allgemeinen Formel (ii) sind beispielsweise Isobutyraldehyd, 2-Methylpentanal, 2-Ethylhexanal und 2-Phenylpropanal sowie deren Gemische. Bevorzugt ist Isobutyraldehyd.

Formaldehyd kann in wässriger Form, die zum Teil oder ganz auch Alkohole wie z. B. Methanol oder Ethanol enthalten kann, als Paraformaldehyd und/oder Trioxan verwendet werden.

Im Allgemeinen sind alle Monomere, die in der Literatur zur Herstellung von Harnstoff-Aldehyd-Harzen B) beschrieben sind, geeignet. Besonders bevorzugt sind Harnstoff, Isobutyraldehyd und Formaldehyd.

Typische Herstellungsweisen und Zusammensetzungen sind z. B. in DE 27 57 220, DE-OS 27 57 176 sowie EP 0 271 776 beschrieben. Handelsübliche Produkte sind das Laropal^{®} A81 oder das Laropal^{®} A 101 der BASF AG.

Die Komponente B) ist gekennzeichnet durch
- eine Hydroxylzahl zwischen 0 und 450 mg KOH/g, bevorzugt zwischen 0 und 375 mg KOH/g, besonders bevorzugt zwischen 0 und 350 mg KOH/g,
- eine Farbzahl nach Gardner (50 Gew.-% in Ethylacetat) zwischen 0 und 5, bevorzugt zwischen 0 und 3,0, besonders bevorzugt zwischen 0 und 2,0,
- eine Farbzahl nach Gardner (50 Gew.-% in Ethylacetat) nach thermischer Belastung des Harzes (24 h, 150 °C) zwischen 0 und 10,0, bevorzugt zwischen 0 und 7,5, besonders bevorzugt zwischen 0 und 5,0,
- ein zahlenmittleres Molekulargewicht Mn von 300 bis 10.000 g/mol, bevorzugt von 400 bis 5.000 g/mol, besonders bevorzugt von 400 bis 3.000 g/mol,
- eine Polydispersität (Mw/Mn) zwischen 1,25 und 4,0, besonders bevorzugt zwischen 1,3 und 3,5,
- einen Schmelzpunkt/-bereich zwischen 20 und 180 °C, bevorzugt zwischen 30 und 140 °C, besonders bevorzugt zwischen 40 und 130°C,
- eine Löslichkeit in unpolaren, organischen Lösemitteln.

Auch hier sind die Eigenschaften beliebig variierbar.

Die Hydroxylzahl ist ein Maß für die Polarität der Harze. Je höher sie bei ansonsten konstanten Parametern der Harzeigenschaften ist (z. B. Carbonylzahl, Molekulargewicht), desto höher ist die Polarität. Um eine gute Verträglichkeit zu der Komponente A) zu gewährleisten, ist die Hydroxylzahl so niedrig zu wählen, dass die Löslichkeit in unpolaren Lösemitteln gegeben ist. Auf der anderen Seite haften nachfolgende Schichten besser auf der Primerschicht, je polarer der Primer ist. Die optimale Hydroxylzahl liegt zwischen 0 und 450 mg KOH/g, bevorzugt zwischen 0 und 375 mg KOH/g, besonders bevorzugt zwischen 0 und 350 mg KOH/g. Die Bestimmung erfolgt in Anlehnung an die DIN 53240-2 "Bestimmung der Hydroxylzahl". Hierbei ist darauf zu achten, dass eine Acetylierungszeit von 3 h exakt eingehalten wird.

Die Bestimmung der Farbzahl nach Gardner erfolgt in 50 Gew.-%iger Lösung der Komponente B) in Ethylacetat in Anlehnung an DIN ISO 4630 und ist ein Maß für die Farbe des Harzes. Je geringer die Farbzahl ist, desto farbloser ist das Harz. Ebenfalls wird auf diese Weise die Farbzahl nach thermischer Belastung ermittelt. Diese Methode kann verwendet werden, um einen Hinweis auf die Hitzebeständigkeit der Komponente B) zu erhalten. Hierzu wird die Komponente B) zunächst 24 h bei 150 °C in Luftatmosphäre gelagert (s. Bestimmung des nicht flüchtigen Anteils). Sodann erfolgt die Bestimmung der Farbzahl nach Gardner in 50 Gew.-%iger Lösung des thermisch belasteten Harzes in Ethylacetat in Anlehnung an DIN ISO 4630. Je geringer die Farbzahl ist, desto hitzebeständiger ist das Harz.

Die Messung des Molekulargewichts und der Polydispersität der Komponente B) erfolgen mittels Gelpermeationschromatographie in Tetrahydrofuran gegen Polystyrol als Standard. Die Polydispersität (Mw/Mn) berechnet sich aus dem Verhältnis des Gewichtsmittels (Mw) zum Zahlenmittel (Mn).
Je höher das Molekulargewicht ist, desto höher liegt der Schmelzbereich der Komponente B) und desto besser ist die Antrocknungsgeschwindigkeit, desto höher ist jedoch auch die Lösungsviskosität. Bei gegebenem Molekulargewicht (Mn) ist die Lösungsviskosität umso höher, je uneinheitlicher das gelöste Polymer ist (hohe Polydispersität).

Idealerweise liegt das zahlenmittlere Molekulargewicht Mn zwischen 300 und 10 000 g/mol, bevorzugt zwischen 400 und 5 000 g/mol, besonders bevorzugt zwischen 400 und 3 000 g/mol und die Polydispersität (Mw/Mn) zwischen 1,25 und 4,0, besonders bevorzugt zwischen 1,3 und 3,5.

Ein möglichst hoher Schmelzbereich der Komponente B) ist erwünscht, damit z. B. die Antrocknungsgeschwindigkeit der erfindungsgemäßen Zusammensetzung, die Härte und die Blockfestigkeit der Beschichtungen möglichst hoch sind.

Die Bestimmung erfolgt mit einem Kapillarschmelzpunkt-Messgerät (Büchi B-545) in Anlehnung an die DIN 53181. Der bevorzugte Schmelzpunkt/-bereich der Komponente B) liegt zwischen 20 und 180 °C, bevorzugt zwischen 30 und 140 °C, besonders bevorzugt zwischen 40 und 130 °C.

Die Löslichkeit der Komponente B) ist in üblichen organischen Lösemitteln wie z. B. Ethylacetat, Butylacetat, Aceton, Butanon, usw. gegeben.
Darüber hinaus ist die Komponente B) in unpolaren Lösemitteln löslich. Dies ist zwingend erforderlich, da es nur so gelingt, die sehr unpolare Komponente A) mit der Komponente B) homogen zu mischen.

Die Komponente B) ist in 10 und 50 Gew.-%iger Verdünnung löslich in aromatischen Lösemitteln wie z. B. Xylolen, Toluol, Benzol, Kresolen, Naphthalin, Tetrahydronaphthalin und/oder in aliphatischen Lösemitteln und Lösemittelgemischen, wie Dekahydronaphthalin, Hexan, Heptan, (Methyl)Cyclohexan, Kristallölen, Testbenzinen, Terpentinen, Paraffinen allein oder in Mischung.

### Komponente C)

Die erfindungswesentliche Komponente C) wird in Mengen von 1 bis 98 Gew.-%, bevorzugt von 2 bis 98 Gew.-%, besonders bevorzugt 20 bis 98 Gew.-% eingesetzt.

Als Komponente C) geeignet sind generell alle organischen Lösemittel, die in der Klebstoff- und Lackindustrie verwendet werden.

Bevorzugt werden z. B. aromatische, aliphatische und/oder cycloaliphatische Lösemittel und Lösemittelgemische, wie z. B. Xylole, Toluol, Benzol, Kresole, Naphthalin, Tetrahydronaphthalin, Dekahydronaphthalin, Hexan, Heptan, (Methyl)Cyclohexan, Kristallöle, Testbenzine, Terpentine, Paraffine allein oder in Mischung.

### Komponente D)

Die Komponente D) kann optional enthalten sein und wird in Mengen von 0 bis 97 Gew.-% eingesetzt. Als Komponente D) geeignet sind Hilfs- und Zusatzstoffe wie zum Beispiel Inhibitoren, weitere organische Lösemittel, Wasser, wasserabfangende Substanzen, grenzflächenaktive Substanzen, wie z. B. Entschäumer, Entlüfter, Gleit- und Verlaufmittel, Substratnetzmittel, Antiblockingagents, Sauerstoff- und/oder Radikalfänger, Katalysatoren, Lichtschutzmittel, Farbaufheller, Photosensibilisatoren und -initiatoren, Additive zur Beeinflussung rheologischer Eigenschaften wie z. B. Thixotropiermittel und/oder Eindickungsmittel, Hautverhinderungsmittel, Antistatika, Netz- und Dispergiermittel, Vernetzer wie z. B. blockierte oder nicht blockierte (Poly)lsocyanate, Konservierungsmittel wie z. B. auch Fungizide und/oder Biozide, thermoplastische Additive, Weichmacher, Mattierungsmittel, Brandschutzmittel, interne Trennmittel, Treibmittel und/oder Farbstoffe, Pigmente und/oder Füllstoffe und/oder nicht gepfropfte, leicht hydrolysierbare Silane wie z. B. Hexadecyltrimethoxysilan oder Hexadecyltriethoxysilan.

Darüber hinaus können als Komponente D) in Mengen bis zu 40 Gew.-% weitere Polymere enthalten sein, wie z. B. Polyurethane, Polyacrylate, Polyether, Polyester, Alkydharze, Polyamide, Casein, Celluloseether, Derivate der Cellulose, Polyvinylalkohole und Derivate, Polyvinylacetate, Polyvinylpyrolidone, Kautschuke, Naturharze, Kohlenwasserstoffharze wie z. B. Cumaron-, Inden-, Cyclopentadienharze, Terpenharze, Maleinatharze, Phenolharze, Phenol-/Harnstoff-Aldehydharze, Aminoplaste (z. B. Melamin-, Benzoguanaminharze), Epoxyacrylate, Epoxidharze, Kieselsäureester und Alkalisilikate (z. B. Wasserglas), Silikonharze und/oder fluorhaltige Polymere. Diese Bindemittel können fremd- und/oder selbstvernetzend sein, lufttrocknend (physikalisch trocknend) und/oder oxidativ härtend.

### Herstellung der Zusammensetzungen aus den Komponenten A) bis D):

Die Herstellung der Zusammensetzungen erfolgt durch intensives Mischen der Komponenten bei Temperaturen von 20 bis 80 °C ("Lehrbuch der Lacktechnologie", Th. Brock, M. Groteklaes, P. Mischke, Hrsg. V. ZorII, Vincentz Verlag, Hannover, 1998, Seite 229 ff.) gegebenenfalls in Inertgasatmosphäre und unter Ausschluss von Wasser. Hierzu wird die Komponente C) vorgelegt und die Komponenten A), B) und gegebenenfalls D) zugegeben.

Die erfindungsgemäßen Zusammensetzungen aus den Komponenten A) bis D) sind frei von Chlor. Chlorfrei bedeutet, dass keine chlorhaltigen Produkte, die organisch gebundenes Chlor enthalten, wie z. B. Chlorkautschuke, chlorinierte Polyolefine oder ähnliches, verwendet werden. Anorganische Chloride (z. B. Salze) können hingegen enthalten sein, wobei diese in der Regel kein toxikologisches Potential besitzen.

Gegenstand der Erfindung ist auch die Verwendung der nicht reaktiven Zusammensetzungen als Primerzusammensetzungen zur Verbesserung der Haftung auf Kunststoffen, bevorzugt auf unvorbehandelten Kunststoffen.

Die erfindungsgemäßen Zusammensetzungen aus den Komponenten A) bis D) können als Primerzusammensetzungen verwendet werden, die eine sehr gute Haftung von Kleb-, Dicht- und/oder Beschichtungsstoffen auf unvorbehandelten Kunststoffen ermöglichen, so dass übliche Methoden zur Vorbehandlung von Kunststoffen wie z. B. das Beflammen, die Corona-Entladung, die Plasma-Behandlung oder die Gasphasenfluorierung entfallen. Es reicht entsprechend das einfache vorherige Reinigen der Substrate mit typischen Reinigungsmitteln wie z. B. iso-Propanol und/oder n-Hexan aus.

Besonders geeignet sind die erfindungsgemäßen Zusammensetzungen aus den Komponenten A) bis D) als Primer für die Verbesserung der Haftung von Kleb-, Dicht- und/oder Beschichtungsstoffen auf unvorbehandelten, niedrigenergetischen Kunststoffen, die eine Oberflächenspannung unter 40, bevorzugt unter 38, besonders bevorzugt unter 34 mN/m² besitzen.

Als Beispiele für derartige niedrigenergetische Kunststoffe seien Polyolefine wie z. B. aus Polypropylen (PP), modifiziertem Polypropylen, wie z. B. Polypropylen-ethylen-Copolymere (z. B. Blockcopolymere oder Randomcopolymere), Poly-1-buten, Polyethylen (PE), modifiziertem PE, Mischungen wie z. B. Polypropylen/Ethylen-Propylen-Dien-Blends (PP/EPDM) mit geringem EPDM-Gehalt, PP/PE-Blends, aber auch Kautschuke (Naturkautschuke, Butylkautschuk, Chloroprenkautschuk, Silikonkautschuk, EPM, EPDM, NBR, SBR, SBS, BR), Polyvinylchlorid oder spezielle Polyester genannt.

Die Kunststoffe können Werkstücke oder Formkörper sein, Verbundstoffe, wie z. B. Papier- und/oder Aluminiumkaschierungen auf Kunststoff oder Folien.

Die Kunststoffe können im Commodity-Bereich (z. B. Flaschen, Dosen, Tragetaschen, Etiketten o. ä.) oder für hochwertige Anwendungen (z. B. in der Elektronikindustrie, im Automobil- oder Flugzeugbau) verwendet werden.

Überraschend war es allerdings, dass die Haftung nachfolgender Schichten auch auf Glas, Holz, Papier, Kartonagen aller Art, Faserplatten, Metallen (z. B. Eisen, Stahl, Edelstahl, Aluminium, Messing, Kupfer), Keramik oder Beton durch das vorherige Auftragen der erfindungsgemäßen Primerzusammensetzungen verbessert wird.

Die erfindungsgemäßen Zusammensetzungen aus den Komponenten A) bis D) weisen eine schnelle Antrocknung sowie eine hohe Blockfestigkeit auf.

Die Wirkung der Vorbehandlung bleibt auch über einen langen Zeitraum bestehen, so dass wahlweise eine Vorbehandlung direkt nach der Herstellung des Kunststoffes beim Kunststoffhersteller (Off-line) oder aber eine Vorbehandlung direkt vor der Applikation des Beschichtungsstoffes (In-line) möglich ist.

Da die erfindungsgemäße Zusammensetzung chemisch reaktiv ist und sowohl mit (Luft-)feuchtigkeit als auch mit evtl. enthaltenen hydroxygruppenhaltigen Komponenten der Zusammensetzung bzw. mit funktionellen Gruppen des Substrates oder der nachfolgenden Schichten reagieren kann, kann ein Verbund durch die Bildung kovalenter Bindungen zum Untergrund und zu nachfolgenden Schichten entstehen. Hierdurch resultiert eine sehr gute Haftfestigkeit, die auch bei höherer Temperatur erhalten bleibt.

In Abhängigkeit der gewünschten Effekte können die Silangruppen der Komponente A) mit evtl. vorhandenen Hydroxygruppen weiterer Komponenten zur Reaktion gebracht werden, wobei dann ein Netzwerk entsteht. Zur Erhöhung der Vernetzungsgeschwindigkeit können z. B. Katalysatoren verwendet werden, wie z. B. Bismut-, Zink- und/oder Zinnorganyle. Beispiele sind Bismutoctoate oder Dibutylzinndilaurat. Zur Verringerung der Vernetzungsreaktion und zur Reduktion der Vernetzungsdichte können andererseits - falls gewünscht - nicht gepfropfte, leicht hydrolysierbare Silane wie z. B. Hexadecyltrimethoxysilan oder Hexadecyltriethoxysilan zugesetzt werden. Solche Produkte können auch gegebenenfalls eindiffundierendes Wasser abfangen. Es empfiehlt sich, hier höhermolekulare Silane zu verwenden, da diese einen hohen Siedepunkt besitzen und somit keine Entsorgungs- und Arbeitshygieneprobleme verursachen.

Je nach Einsatzzweck werden auf die erfindungsgemäßen Primerschichten nachfolgende Kleb-, Dicht- oder Beschichtungsstoffe appliziert. Die nachfolgende Schicht kann dabei *direkt "nass-in-nass" auf den Primer appliziert werden,* d. h. *das Lösemittel wird nicht* entfernt. Es ist auch möglich, den Primer zunächst bei Raumtemperatur oder erhöhter Temperatur von den flüchtigen Bestandteilen zu befreien und dann die nachfolgende Schicht auf den "trocknen" - d. h. lösemittelfreien - Primer zu applizieren.

Die erfindungsgemäße Zusammensetzung kann mit üblichen Methoden auf die Kunststoffsubstrate appliziert werden. Beispiele hierfür sind u. a. (elektrostatische) Sprüh-, Spritzverfahren, Spincoaten, Gießen, Tauchen, Trommeln, Fluten, Walzen, Wischen, Waschen, Drucken, Rollen, Streichen, Extrudieren.

Die Schichtdicke der erfindungsgemäßen Primerschichten liegt nach Abdampfen der flüchtigen Bestandteile wie z. B. Lösemittel zwischen 0,01 und 100 µm, bevorzugt 0,1 und 30 µm, besonders bevorzugt zwischen 0,2 und 10 µm.

Als nachfolgende Beschichtungsstoffe können alle Beschichtungsstoffe verwendet werden, insbesondere alle lösemittelhaltigen, wässrigen Beschichtungsstoffe oder lösemittelfreien Beschichtungsstoffe (z. B. strahlenhärtbare Beschichtungsstoffe und/oder Pulverlacke) wie z. B. Spachtelmassen, Füller, Basis- und/oder Decklacke sowie Druckfarben, Kugelschreiberpasten, Tinten, Polituren, Lasuren, Laminierungen, Heißsiegellacke, Kosmetikartikel und/oder Dicht- und Dämmstoffe sowie Klebstoffe.

Der Verlauf der erfindungsgemäßen Zusammensetzungen auf den Substraten sowie der Verlauf der nachfolgenden Beschichtungsstoffe auf den erfindungsgemäßen Zusammensetzungen ist einwandfrei und die Oberflächen sind frei von Störungen, wie zum Beispiel Kratern und Benetzungsstörungen.

Gegenstand der Erfindung sind auch Gegenstände hergestellt unter Verwendung der nicht reaktiven Zusammensetzungen.

Die folgenden Beispiele sollen die gemachte Erfindung weiter erläutern aber nicht ihren Anwendungsbereich beschränken:

### I.) Komponente A): Herstellung des silangepfropften Polyolefins

Zur Herstellung eines silangepfropfen Polyolefins wurde ein weitgehend amorphes Poly-α-olefin folgender Monomerzusammensetzung verwendet:
6 Gew.-% Ethen
64 Gew.-% Propen
30 Gew.-% 1-Buten

In einem Doppelschneckenextruder (Berstorff ZE 40) wurde eine aus
92,9 Gew.-% dieses Poly-α-olefins,
6,0 Gew.-% Vinyltrimethoxysilan (Dynasilan® VTMO) und
1,1 Gew.-% Dicumylperoxid
bestehende Mischung unter Luft- und Feuchtigkeitsausschluss bei einer Temperatur von etwa 170 °C gemischt und über eine Verweilzeit von ca. 90 s auf dieser Temperatur gehalten. Das überschüssige VTMO wurde in der letzten Zone des Extruders bei einem Vakuum von etwa 20 mbar verdampft und in Kühlfallen kondensiert. Das Produkt wurde durch die Zugabe von Irganox 1076 stabilisiert. Die Schmelzviskosität betrug 6 Pa·s bei 190 °C. Das Produkt ist z. B. in Xylol, Solvesso® 100 und in Shellsol® D40 löslich.

### II.) Komponente B)

### 1. Herstellung des Keton-Aldehydharzes

Die Herstellung des Keton-Aldehydharzes erfolgte gemäß dem Beispiel GL 254 der EP 1 486 520 A1.

### 2. Herstellung des hydrierten Keton-Aldehydharzes

Die Herstellung des hydrierten Keton-Aldehydharzes erfolgte gemäß dem Beispiel 2 der DE 102006026758.3.

### 3. Herstellung des Harnstoff-Aldehydharzes

Die Herstellung des Harnstoff-Aldehydharzes erfolgte gemäß dem Beispiel 1 der DE 27 17 76.

Die folgende Tabelle 1 gibt einen Überblick über die Eigenschaften der Harze II-1 bis II-3

**Tabelle 1. Eigenschaften der Harze II-1 bis II-3**

| | Harz II-1 | Harz II-2 | Harz II-3 |
|---|---|---|---|
| Hydroxylzahl [mg KOH/g] | 7,6 | 16,0 | 19,4 |
| Schmelzpunkt [°C] | 63 | 49 | 63 |
| Gehalt nicht flüchtiger Bestandteile (24 h bei 150 °C) [Masse-%] | 78,2 | 99,6 | 64,3 |
| Farbzahl nach Gardner (50 % in Ethylacetat) | 1,0 | 0,0 | 1,1 |
| Farbzahl nach Gardner (nach 24 h bei 150 °C; 50 % in Ethylacetat) | 3,9 | 0,2 | 3,2 |
| Mn (GPC gegen PS) [g·mol⁻¹] | 500 | 890 | 1550 |
| Mw (GPC gegen PS) [g·mol⁻¹] | 670 | 1350 | 4640 |
| Polydispersität | 1,3 | 1,5 | 3,0 |
| Löslichkeit (10 % / 50 %) | | | |
| Testbenzin | klar/klar | klar/klar | klar/klar |
| Isopar H | klar/klar | klar/klar | klar/klar |
| n-Hexan | leicht trübe/ klar | klar/klar | leicht trübe/ klar |
| Xylol | klar/klar | klar/klar | klar/klar |

### Herstellung der Primer-Zusammensetzungen

Die in der nachfolgenden Tabelle 2 angegebenen Stoffe werden unter Rühren gelöst und homogenisiert. Dazu wird das jeweilige Lösemittel (Komponente C)) vorgelegt und das Polyolefin I-1 sowie das jeweilige Harz II-1 bis II-3 langsam unter Rühren bei Raumtemperatur zugegeben. Um das Lösen zu beschleunigen, wird kurzzeitig unter Rühren auf 60 °C erwärmt. Nach dem Lösen, werden die Lösungen filtriert.

**Tabelle 2. Zusammensetzung des Vergleichs V1 und der Primer P1 bis P6 (alle Angaben in Gramm/g)**

| | V1 | P1 | P2 | P3 | P4 | P5 | P6 | P7 | P8 |
|---|---|---|---|---|---|---|---|---|---|
| Polyolefin I-1 | 10,0 | 5,0 | 3,3 | 2 | 5,0 | 5,0 | 5,0 | 5,0 | 5,0 |
| Harz II-1 | - | 5,0 | 6,7 | 8 | 5,0 | 5,0 | 5,0 | - | - |
| Harz II-2 | - | - | - | - | - | - | - | 5,0 | - |
| Harz II-3 | - | - | - | - | - | - | - | - | 5,0 |
| Xylol | 90,0 | 90,0 | 90,0 | 90,0 | - | - | - | 90,0 | 90,0 |
| Solvesso® 100 | - | - | - | - | 90,0 | - | - | - | - |
| Shellsol® D 40 | - | - | - | - | - | 90,0 | - | - | - |
| Testbenzin | - | - | - | - | - | - | 90,0 | - | - |

Alle Lösungen sind klar bis leicht trübe, farblos bis gelblich und wasserdünn. Bei der Vergleichslösung V1 war der Anteil unlöslicher Bestandteile relativ höher als bei den Zusammensetzungen P1 bis P8. Dies kann damit erklärt werden, dass die Harze II-1 bis II-3 als Lösevermittler wirken. V1 stellt den direkten Vergleich zu der WO 2004/078365 dar.

Die Lösungen V1 und P1 bis P8 wurden mittels Rakel (2 µm Nassschicht) auf Folien, die zuvor mit Ethanol und n-Hexan gereinigt worden waren, appliziert. Nach dem Abdampfen der Lösemittel (unterschiedliche Ablüftzeiten, s. Tab. 3) wurde eine Druckfarbe mittels Rakel (2 µm Nassschicht) auf die Folien appliziert und bei Raumtemperatur von den Lösemitteln befreit.

Die Beurteilung der Hafteigenschaften erfolgte nach dem so genannten Knittertest. Hierzu wurde die beschichtete Folie nach 24 h nach erfolgter Applikation der Druckfarbe "geknittert". Ist die Beschichtung unbeschädigt, ist die Haftung sehr gut (1). Bei Verletzungen der Beschichtung wird der Grad der Verletzung beurteilt (2: geringe Abplatzungen, ..., 6 : vollständige Enthaftung).

Außerdem wurde die Haftung mittels Klebeband-Abreißmethode (Tesa-Test) beurteilt. Dazu wird ein Klebeband nach unterschiedlichen Ablüftzeiten der Druckfarbe (5 min, 1 h, 24 h) auf den Druckfarbenfilm geklebt und anschließend wieder abgerissen. Ist die Beschichtung unbeschädigt, ist die Haftung sehr gut (1). Bei Verletzungen der Beschichtung wird der Grad der Verletzung beurteilt (2: geringe Abplatzungen, ..., 6 : vollständige Enthaftung).

Eine Druckfarbe folgender Zusammensetzung wurde verwendet:
39,0 g Ethanol
11,2 g Ethylacetat
40,0 g Kunstharz 1201 (Degussa AG)
7,2 g Hacolor blau 50423 (Hagedorn)

Die Bestandteile wurden in angegebener Reihenfolge unter Rühren zusammen gegeben und homogenisiert.

Als Foliensubstrate (Pütz-Folien) wurden folgende Typen verwendet:
Treofan NNA 40 (PP-Folie), Hostaphan RN 50 (PET-Folie), Genotherm EE 87 (PVC-Folie)

In den nachfolgenden Tabellen 3-1 und 3-2 sind die Ergebnisse der Haftungsuntersuchungen (Knittertest, Tesatest) der Druckfarben auf dem jeweiligen Primer P1 bis P8 im Vergleich zu der Druckfarbe auf der jeweiligen unbehandelten Folie und auf dem Vergleichsprimer V1 dargestellt.

**Tabelle 3-1. Ergebnisse der Haftungsuntersuchungen (Knittertest, Tesatest) der Druckfarben auf dem jeweiligen Primer P1 bis P8 im Vergleich zu der Druckfarbe auf der jeweiligen unbehandelten Folie und auf dem Vergleichsprimer V1**

| Probe | Trocknungsbedingungen des Primers | Knittertest | | | Tesa-Test | | | | | | | | |
|---|---|---|---|---|---|---|---|---|---|---|---|---|---|
| | | PP | PET | PVC | | PP | | PET | | PVC | | | |
| | | | | | 5 min | 1 h | 24 h | 5 min | 1 h | 24 h | 5 min | 1 h | 24 h |
| ohne | ohne Primer (Vergleich) | 6 | 6 | 4 | 6 | 6 | 6 | 6 | 6 | 5 | 4-5 | 3-4 | 3 |
| V1 | 0,5 min RT | 6 | 6 | 5 | 6 | 6 | 6 | 6 | 6 | 6 | 6 | 5 | 5 |
| | 1 min RT | 2-3 | 5 | 4-5 | 4 | 3 | 2-3 | 6 | 5-6 | 5 | 5 | 4-5 | 4 |
| | 2 min RT | 2-3 | 4 | 3 | 2-3 | 2 | 2 | 6 | 5 | 4 | 3 | 3 | 2-3 |
| P1 | 0,5 min RT | 5 | 3-4 | 3 | 4 | 4 | 3 | 5 | 3-4 | 3 | 2-3 | 3 | 2 |
| | 1 min RT | 2 | 2 | 3 | 1-2 | 1 | 1 | 3 | 2 | 1 | 3 | 2 | 1 |
| | 2 min RT | 1 | 1 | 1 | 1-2 | 1 | 1 | 1 | 1 | 1 | 1 | 1 | 1 |
| P2 | 0,5 min RT | 5 | 3 | 3 | 4 | 3 | 3 | 5 | 3 | 3 | 3 | 2 | 2 |
| | 1 min RT | 1 | 2-3 | 2 | 1 | 1 | 1 | 2 | 2 | 1 | 2 | 2 | 1-2 |
| | 2 min RT | 1 | 1 | 1 | 1 | 1 | 1-2 | 1 | 1 | 1 | 1-2 | 1-2 | 1-2 |
| P3 | 0,5 min RT | 3 | 3 | 2 | 3 | 3 | 2 | 4 | 3 | 2 | 3 | 2 | 2 |
| | 1 min RT | 1-2 | 2 | 2 | 1 | 1 | 1 | 2 | 2 | 1 | 2 | 1-2 | 1 |
| | 2 min RT | 1 | 1 | 1 | 1 | 1 | 1 | 1 | 1 | 1 | 1 | 1 | 1 |
| P4 | 0,5 min RT | 5 | 4 | 3 | 4 | 4 | 3-4 | 5 | 4 | 3 | 3 | 3 | 2 |
| | 1 min RT | 2-3 | 2 | 2-3 | 1-2 | 2 | 1-2 | 3-4 | 1-2 | 1 | 2-3 | 3 | 2 |
| | 2 min RT | 1-2 | 1 | 1 | 1-2 | 1 | 1 | 1-2 | 1 | 1 | 1 | 1 | 1 |

**Tabelle 3-2. Ergebnisse der Haftungsuntersuchungen (Knittertest, Tesatest) der Druckfarben auf dem jeweiligen Primer P1 bis P8 im Vergleich zu der Druckfarbe auf der jeweiligen unbehandelten Folie und auf dem Vergleichsprimer V1**

| Probe | Trocknungsbedingungen des Primers | Knittertest | | | Tesa-Test | | | | | | | | |
|---|---|---|---|---|---|---|---|---|---|---|---|---|---|
| | | PP | PET | PVC | PP | | | PET | | | PVC | | |
| | | | | | 5 min | 1 h | 24 h | 5 min | 1 h | 24 h | 5 min | 1 h | 24 h |
| P5 | 0,5 min RT | 4 | 4 | 3 | 3-4 | 3-4 | 3 | 5 | 4 | 3 | 3 | 3 | 2 |
| | 1 min RT | 2 | 2-3 | 2-3 | 2 | 2 | 1 | 3 | 2 | 1 | 3 | 2-3 | 2 |
| | 2 min RT | 1 | 1 | 1 | 1-2 | 1 | 1 | 1-2 | 1 | 1 | 1-2 | 1-2 | 1 |
| P6 | 0,5 min RT | 4 | 5 | 3-4 | 3 | 3 | 3 | 4 | 4 | 3 | 4 | 4 | 2-3 |
| | 1 min RT | 2-3 | 3 | 3 | 2 | 1 | 1 | 3 | 2 | 1 | 3 | 3 | 2 |
| | 2 min RT | 1 | 1 | 1 | 1 | 1 | 1 . | 2 | 1 | 1 | 1-2 | 1-2 | 1 |
| P7 | 5 min RT | 1-2 | 1-2 | 1-2 | 1-2 | 1 | 1 | 2 | 1 | 1-2 | 1-2 | 1 | 1 |
| P8 | 0,5 min RT | 4 | 3 | 4 | 4 | 3 | 2 | 4 | 4 | 3 | 3 | 3 | 2 |
| | 1 min RT | 2 | 3 | 3 | 1-2 | 1-2 | 1 | 3 | 2 | 1-2 | 3 | 2-3 | 2 |
| | 2 min RT | 1 | 1-2 | 1 | 1 | 1 | 1 | 1 | 1-2 | 1 | 2-3 | 1-2 | 1 |

| | | | | | | | | | | | | | |
|---|---|---|---|---|---|---|---|---|---|---|---|---|---|
| RT = Raumtemperatur | | | | | | | | | | | | | |

Die Haftung der Druckfarbe auf dem jeweiligen Kunststoff ist ohne eine Primerschicht schlecht. Dies zeigen die Ergebnisse aus den Knittertests und den Tesatests. Lediglich auf PVC wird eine geringfügig bessere Haftung (Tesatest 3 nach 24 h) gefunden. Der Vergleichsversuch V1 zeigt, dass ein Primer ohne Komponente B) zwar die Haftung grundsätzlich verbessern kann. Allerdings wird eine relative Verbesserung erst nach einer Ablüftzeit von 2 min beobachtet und ist nicht auf sehr hohem Niveau. Im Gegensatz hierzu wird die Haftung der Druckfarbe auf den Kunststoffsubstraten bereits nach kurzen Ablüftzeiten durch die erfindungsgemäßen Primerschichten signifikant verbessert.

Es zeigt sich, dass sich eine höhere Konzentration an Komponente B) (P1 bis P3) positiv auf die Haftung nach kurzen Ablüftzeiten auswirkt. Da alle diese Primer-Beschichtungen bereist nach 30 Sekunden klebfrei sind, ist auch eine hohe Blockfestigkeit nach kürzester Zeit gewährleistet.

Die Beispiele P4 bis P6 zeigen im Vergleich zu P1 keine signifikanten Unterschiede auf. Die Unterschiede liegen im Bereich der Messgenauigkeit der Relativmethoden. Daher ist der Einfluss des verwendeten Lösemittels (Komponente C)) gering.

Die Lösungen V1 und P1 bis P8 wurden mittels Rakel (2 µm Nassschicht) auf Polyethylen- und Polypropylenpanels der Fa. Krüppel, die zuvor mit Ethanol und n-Hexan gereinigt worden waren, appliziert. Nach dem Abdampfen der Lösemittel wurde eine Druckfarbe mittels Rakel (2 µm Nassschicht) appliziert und bei RT vom Lösemittel befreit. Außerdem wurde ein handelsüblicher 2K-Polyurethanlack mittels Sprühapplikation auf die Panels appliziert und über 30 min bei 80 °C getrocknet.

Die Beurteilung der Hafteigenschaften der Druckfarben erfolgte mittels Klebeband-Abreißmethode (Tesa-Test). Dazu wurde ein Klebeband nach unterschiedlichen Ablüftzeiten der Druckfarbe (5 min, 1 h, 24 h) auf den Druckfarbenfilm geklebt und anschließend wieder abgerissen. Ist die Beschichtung unbeschädigt, ist die Haftung sehr gut (1). Bei Verletzungen der Beschichtung wird der Grad der Verletzung beurteilt (2: geringe Abplatzungen, ..., 6 : vollständige Enthaftung).

Bei den applizierten Lacken wurde eine Gitterschnittprüfung in Anlehnung an die DIN EN ISO 2409 durchgeführt (GT 0 sehr gut, GT 5 vollständige Enthaftung).

Die Ergebnisse sind in Tabelle 4 dargestellt.

**Tabelle 4. Ergebnisse der Haftungsuntersuchungen der 2K-Lacke (Gitterschnittprüfung) und der Druckfarben (Tesa-Test) auf dem jeweiligen Primer P1 bis P8 im Vergleich zu dem Lack/der Druckfarbe auf dem jeweiligen unbehandelten Panel und auf dem Vergleichsprimer V1**

| Probe | Trocknungsbedingungen des Primers | Gitterschnitt | | Tesa-Test | | | | | |
|---|---|---|---|---|---|---|---|---|---|
| | | PE | PP | PE | | | PP | | |
| | | | | 5 min | 1 h | 24 h | 5 min | 1 h | 24 h |
| ohne | ohne Primer (Vergleich) | 5 | 5 | 6 | 6 | 6 | 6 | 6 | 6 |
| V1 | 5 min RT | 5 | 5 | 6 | 6 | 6 | 3 | 3 | 3 |
| | 30 min 100°C | 4 | 3 | 4-5 | 3 | 2 | 3 | 2-3 | 2 |
| P1 | 5 min RT | 4 | 1 | 4 | 3 | 3 | 1 | 1 | 1 |
| | 30 min 100°C | 1 | 0 | 1 | 1 | 1 | 1 | 1 | 1 |
| P2 | 5 min RT | 4 | 1 | 4 | 3 | 3 | 1 | 1 | 1 |
| | 30 min 100°C | 2 | 0 | 2 | 1-2 | 1-2 | 1 | 1 | 1 |
| P3 | 5 min RT | 4 | 1 | 3 | 3 | 3 | 1 | 1 | 1 |
| | 30 min 100°C | 2-3 | 0-1 | 2 | 1-2 | 1-2 | 1 | 1 | 1 |
| P4 | 5 min RT | 4 | 2 | 4 | 3-4 | 3-4 | 1 | 1 | 1 |
| | 30 min 100°C | 2-3 | 0 | 2 | 1 | 1 | 1 | 1 | 1 |
| P5 | 5 min RT | 3-4 | 1-2 | 4 | 3 | 3 | 1 | 1 | 1 |
| | 30 min 100°C | 2 | 0-1 | 1 | 1 | 1 | 1 | 1 | 1 |
| P6 | 5 min RT | 4 | 2 | 4 | 3 | 3 | 1 | 1 | 1 |
| | 30 min 100°C | 2 | 0-1 | 1-2 | 1 | 1 | 1 | 1 | 1 |
| P7 | 5 min RT | 4 | 3 | 4 | 4 | 4 | 1 | 1 | 1 |
| | 30 min 100°C | 3 | 2 | 3 | 2-3 | 3 | 1 | 1 | 1 |
| P8 | 5 min RT | 4 | 1-2 | 3 | 3 | 3 | 1 | 1 | 1 |
| | 30 min 100°C | 3 | 0-1 | 1 | 1 | 1 | 1 | 1 | 1 |

Die Haftung des 2K-Polyurethanlackes auf dem jeweiligen Kunststoff ist ohne eine Primerschicht schlecht. Gleiche Ergebnisse resultieren aus der Vorbehandlung mittels Vergleichsprimer V1. In allen Fällen ist keine Haftung gegeben (Gitterschnitt GT 5).

Auf PE wird die Haftung durch Vorbehandlung mittels der erfindungsgemäßen Primer P1 bis P8 verbessert, wenn der Primer bei Raumtemperatur vom Lösemittel befreit wurde. Werden die erfindungsgemäßer Primer P1 bis P8 allerdings bei erhöhter Temperatur vom Lösemittel befreit, resultieren deutlich verbesserte Haftungsergebnisse des 2K-Lackes auf PE.
Auf PP verbessern die erfindungsgemäßen Primer P1 bis P8 die Haftung des Lackes hervorragend. Im Trend zeichnet sich jedoch auch hier ab, dass ein Verdampfen des Lösemittels bei erhöhter Temperatur die Haftungseigenschaften weiter verbessern kann.

Die Haftung der Druckfarbe auf dem jeweiligen Kunststoff ist ohne eine Primerschicht ebenfalls schlecht (Tesa-Test 6). Die Vorbehandlung von PE mittels V1 weist nach 5 min. abdampfen der Lösemittel bei RT keine Verbesserung auf. Eine Verbesserung wird dagegen nach forcierter Trocknung des Primers gefunden. Auf PP werden Verbesserungen durch die Vorbehandlung mittels V1 gefunden.

Werden die erfindungsgemäßen Primer bei RT vom Lösemittel befreit, resultieren im Falle des PE verbesserte Haftungseigenschaften der Druckfarbe auf dem jeweiligen Primer. Durch die forcierte Trocknung bei 100 °C des jeweiligen Primers werden sehr gute Haftungseigenschaften der Druckfarbe auf den so vorbehandelten PE-Panels gefunden. Im Falle von PP ist die Haftung steht hervorragend, unabhängig von der Temperatur während des Abdampfens der Lösemittel.

Auch hier zeigen die Beispiele P4 bis P6 im Vergleich zu P1 keine signifikanten Unterschiede auf. Daher ist der Einfluss des verwendeten Lösemittels (Komponente C)) gering.

Der Primer P1 wurde auf Treofan NNA 40 (PP-Folie) wie oben beschrieben appliziert. Die Druckfarbe wurde jedoch erst 3 bzw. 6 Monate nach Applikation des Primers aufgetragen. Die Untersuchung der Haftungseigenschaften zeigt keine Unterschiede im Vergleich zu den Untersuchungen nach direkter Applikation der Druckfarbe auf. Daher ist bewiesen, dass die haftungsverbessernde Wirkung auch über einen langen Zeitraum konstant bleibt (vgl. Tabelle 5).

**Tabelle 5. Ergebnisse der Haftungsuntersuchungen (Knittertest, Tesatest) der Druckfarbe auf dem Primer P1 auf Treofan NNA 40 nach 2 min und nach 3 bzw. 6 Monaten der Applikation des Primers**

| Probe | Trocknungsbedingungen des Primers | Knittertest | Tesatest | | |
|---|---|---|---|---|---|
| | | | 5 min | 1 h | 24 h |
| P1 | 2 min RT | 1 | 1-2 | 1 | 1 |
| | 3 Monate RT | 0 | 1-2 | 1 | 1 |
| | 6 Monate RT | 0-1 | 1 | 1 | 1 |

Der Primer P1 wurde auf Treofan NNA 40 (PP-Folie) wie oben beschrieben appliziert. Die Druckfarbe wurde nach 2 min nach Applikation des Primers aufgetragen. Die Folie wurde 1 h bei 60 bzw. 80°C gelagert. Nach 1 min Warten bei Raumtemperatur wurden Tesa- und Knittertest durchgeführt. Die Werte entsprechen denen, die in Tabelle 3-1 gezeigt sind. Der Versuch wurde mit V1 wiederholt. Hier ist die Haftung der Druckfarbe deutlich geringer. Damit ist bewiesen, dass die Haftung durch die erfindungsgemäße Zusammensetzung auch bei hoher Temperatur erhalten bleibt (Tabelle 6).

**Tabelle 6. Ergebnisse der Haftungsuntersuchungen (Knittertest, Tesatest) der Druckfarbe auf dem Primer P1 und V1 auf Treofan NNA 40 nach Lagerung bei 60 bzw. 80 °C**

| Probe | Lagerbedingungen 1 h | Knittertest | Tesatest | | |
|---|---|---|---|---|---|
| | | | 5 min | 1 h | 24 h |
| P 1 | 1 h 60°C | 1 | 1-2 | 1 | 1 |
| P 1 | 1 h 80°C | 1 | 2 | 1 | 1 |
| V 1 | 1 h 60°C | 4 | 5 | 5 | 4 |
| V 1 | 1 h 80°C | 5 | 6 | 5 | 5 |

## Patentansprüche

1. Silangruppenhaltige Zusammensetzungen, die kein organisch gebundenes Chlor enthalten, im Wesentlichen enthaltend
A) 1 bis 98 Gew.-% mindestens eines silangepfropften, weitgehend amorphen Poly-α-olefins, das kein organisch gebundenes Chlor enthält und eine Schmelzenthalpie im Bereich von 0 bis 80 J/g aufweist
und
B) 1 bis 98 Gew.-% mindestens eines Keton-, Keton/Aldehyd- und/oder Harnstoff/Aldehyd-Harzes und/oder dessen hydrierten Folgeproduktes
und
C) 1 bis 98 Gew.% mindestens eines Lösemittels
und gegebenenfalls
D) bis zu 97 Gew.-% mindestens eines Hilfs- oder Zuschlagstoffes,
wobei die Summe der Gewichtsangaben der Komponenten A) bis D) 100 Gew.-% beträgt.

2. Silangruppenhaltige Zusammensetzungen nach Anspruch 1,
**dadurch gekennzeichnet,**
**dass** zur Herstellung der Komponente A) ataktisches Polypropylen, ataktisches Poly-1-buten und/oder Co- und/oder Terpolymere der folgenden Monomerzusammensetzung
0 bis 95 Gew.%, bevorzugt 3 bis 95 Gew.-% eines oder mehrerer α-Olefine mit 4 bis 20 Kohlenstoffatomen,
5 bis 100 Gew.-%, bevorzugt 5 bis 97 Gew.-% Propen und
0 bis 50 Gew.-%, bevorzugt 0 bis 20 Gew.-% Ethen
verwendet werden.

3. Silangruppenhaltige Zusammensetzungen nach mindestens einem der vorherigen Ansprüche,
**dadurch gekennzeichnet,**
**dass** als α-Olefine mit 4 bis 20 Kohlenstoffatomen der Komponente A) 1-Buten, 1-Penten, 1-Hexen, 1-Octen, 1-Decen, 1-Dodecen, 1-Octadecen, 3-Methyl-1-buten, ein Methylpenten wie z. B. 4-Methyl-1-penten, ein Methylhexen oder ein Methylhepten allein oder in Mischung eingesetzt werden.

4. Silangruppenhaltige Zusammensetzungen nach mindestens einem der vorherigen Ansprüche,
**dadurch gekennzeichnet,**
**dass** als aufzupfropfendes Silan zur Herstellung der Komponente A) ein Silan verwendet wird, das drei direkt mit dem Silicium verbundene Alkoxygruppen trägt.

5. Silangruppenhaltige Zusammensetzungen nach mindestens einem der vorherigen Ansprüche,
**dadurch gekennzeichnet,**
**dass** Vinyltrimethoxysilan (VTMO), Vinyltriethoxysilan, Vinyl-tris(2-methoxy-ethoxy)silan, 3-Methacryloxypropyltrimethoxysilan (MEMO), 3-Methacryloxypropyltriethoxysilan, Vinyldimethylmethoxysilan und Vinylmethyldibutoxysilan allein oder in Mischung verwendet werden.

6. Silangruppenhaltige Zusammensetzungen nach mindestens einem der vorherigen Ansprüche,
**dadurch gekennzeichnet,**
**dass** das Silan in Mengen zwischen 0,1 und 10 Gew.-%, vorzugsweise zwischen 0,5 und 5 Gew.-% bezogen auf das Polyolefin eingesetzt wird.

7. Silangruppenhaltige Zusammensetzungen nach mindestens einem der vorherigen Ansprüche,
**dadurch gekennzeichnet,**
**dass** als Komponente A) mindestens ein silangepfropftes, weitgehend amorphes Poly-α-olefin, das kein organisch gebundenes Chlor enthält und eine Schmelzenthalpie im Bereich von 0 bis 80 J/g aufweist, verwendet wird,
**gekennzeichnet durch**
• ein gewichtsmittleres Molekulargewicht von 2 000 bis 250 000 g/mol, bevorzugt 3 000 bis 150 000 g/mol, besonders bevorzugt 3 000 bis 125 000 g/mol,
• eine Polydispersität PD von 2,0 bis 40, bevorzugt 2,5 bis 20, besonders bevorzugt 2,5 bis 15,
• eine Glasübergangstemperatur Tg von -80 bis 0 °C, bevorzugt -60 bis 0 °C, besonders bevorzugt -55 bis -10 °C,
• eine Schmelzenthalpie im Bereich von 0 bis 80 J/g, bevorzugt im Bereich von 1 bis 60 J/g, besonders bevorzugt im Bereich von 1 bis 40 J/g sowie
• eine weitgehende Löslichkeit bestimmt **durch** Lösen der Komponente A) in dem jeweiligen Lösemittel oder Lösemittelgemisch in 10 bzw. 50%iger Verdünnung unter Rühren bei Rückflusstemperatur und anschließendem Abkühlen der Lösung auf Raumtemperatur, wobei die Löslichkeit von Komponente A) in Xylol zwischen 80 und 99,9 % liegt, und/oder Quellbarkeit in unpolaren Lösemitteln

8. Silangruppenhaltige Zusammensetzungen nach mindestens einem der vorherigen Ansprüche,
**dadurch gekennzeichnet,**
**dass** als Komponente A) mindestens ein gepfropftes, weitgehend amorphes Poly-αolefins, das kein organisch gebundenes Chlor enthält, verwendet wird, in Mengen von 1 bis 98 Gew.-%, bevorzugt 1 bis 49 Gew.%, besonders bevorzugt 1 bis 40 Gew.-%.

9. Silangruppenhaltige Zusammensetzungen nach mindestens einem der vorherigen Ansprüche,
**dadurch gekennzeichnet,**
**dass** zur Herstellung der Ketonharze und/oder Keton-Aldehydharze (Komponente B)) C-H-acide Ketone eingesetzt werden.

10. Silangruppenhaltige Zusammensetzungen nach mindestens einem der vorherigen Ansprüche,
**dadurch gekennzeichnet,**
**dass** zur Herstellung der Keton-Aldehydharze (Komponente B)) Ketone ausgewählt aus Aceton, Acetophenon, Methylethylketon, tert.-Butylmethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon, Cyclooctanon, Cyclohexanon, 4-tert.-Amylcyclohexanon, 2-sek.-Butylcyclohexanon, 2-tert.-Butylcyclohexanon, 4-tert.-Butylcyclohexanon, 2-Methylcyclohexanon, 3,3,5-Trimethylcyclohexanon als Ausgangsbindungen allein oder in Mischungen eingesetzt werden bevorzugt Acetophenon, Cyclohexanon, 4-tert.-Butylcyclohexanon, 3,3,5-Trimethylcyclohexanon und Heptanon allein oder in Mischung.

11. Silangruppenhaltige Zusammensetzungen nach mindestens einem der vorherigen Ansprüche,
**dadurch gekennzeichnet,**
**dass** zur Herstellung der Ketonharze (Komponente B)) Cyclohexanon eingesetzt wird.

12. Silangruppenhaltige Zusammensetzungen nach mindestens einem der vorherigen Ansprüche,
**dadurch gekennzeichnet,**
**dass** zur Herstellung der Keton-Aldehydharze (Komponente B)) Aldehyde ausgewählt aus Formaldehyd, Acetaldehyd, n-Butyraldehyd und/oder iso-Butyraldehyd, Valerianaldehyd, Dodecanal allein oder in Mischungen eingesetzt werden.

13. Silangruppenhaltige Zusammensetzungen nach mindestens einem der vorherigen Ansprüche,
**dadurch gekennzeichnet,**
**dass** als Aldehyd-Komponente zur Herstellung der Keton-Aldehydharze (Komponente B)) Formaldehyd und/oder para-Formaldehyd und/oder Trioxan eingesetzt wird.

14. Silangruppenhaltige Zusammensetzungen nach mindestens einem der vorherigen Ansprüche,
**dadurch gekennzeichnet,**
**dass** als Komponente B) Harze aus Acetophenon, Cyclohexanon, 4-tert.-Butylcyclohexanon, 3,3,5-Trimethylcyclohexanon, Heptanon allein oder in Mischung und Formaldehyd eingesetzt werden.

15. Silangruppenhaltige Zusammensetzungen nach mindestens einem der vorherigen Ansprüche,
**dadurch gekennzeichnet,**
**dass** als Komponente B) Harze gemäß den Ansprüchen 9 bis 14, die nach Herstellung hydriert wurden, eingesetzt werden.

16. Silangruppenhaltige Zusammensetzungen nach dem vorherigen Anspruch,
**dadurch gekennzeichnet,**
**dass** als Komponente B) hydrierte Folgeprodukte der Harze bestehend aus Acetophenon, Cyclohexanon, 4-tert.-Butylcyclohexanon; 3,3,5-Trimethylcyclohexanon, Heptanon allein oder in Mischung und Formaldehyd eingesetzt werden.

17. Silangruppenhaltige Zusammensetzungen nach mindestens einem der vorherigen Ansprüche,
**dadurch gekennzeichnet,**
**dass** als Komponente B) Harnstoff-Aldehyd-Harze, hergestellt unter Verwendung eines Harnstoffes der allgemeinen Formel (i) 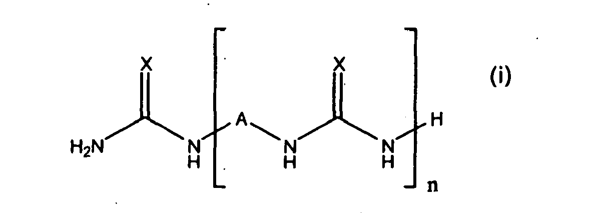 in der X Sauerstoff, A einen Alkylenrest bedeuten und n für 0 bis 3 steht, mit 1,9 (n + 1) bis 2,2 (n + 1) mol eines Aldehyds der allgemeinen Formel (ii) 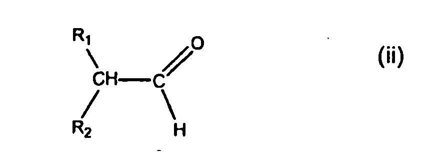 in der R₁ und R₂ für Kohlenwasserstoffreste mit jeweils bis zu 20 Kohlenstoffatomen stehen,
und/oder Formaldehyd, eingesetzt werden.

18. Silangruppenhaltige Zusammensetzungen nach mindestens einem der vorherigen Ansprüche,
**dadurch gekennzeichnet,**
**dass** als Komponente B) Harnstoff-Aldehyd-Harze hergestellt unter Verwendung von Harnstoff, Thioharnstoff, Methylendiharnstoff, Ethylendiharnstoff, Tetramethylendiharnstoff und/oder Hexamethylendiharnstoff oder deren Gemische eingesetzt werden.

19. Silangruppenhaltige Zusammensetzungen nach mindestens einem der vorherigen Ansprüche,
**dadurch gekennzeichnet,**
**dass** als Komponente B) Harnstoff-Aldehyd-Harze hergestellt unter Verwendung von Isobutyraldehyd, Formaldehyd, 2-Methylpentanal, 2-Ethylhexanal und 2-Phenylpropanal oder deren Gemische eingesetzt werden.

20. Silangruppenhaltige Zusammensetzungen nach mindestens einem der vorherigen Ansprüche,
**dadurch gekennzeichnet,**
**dass** als Komponente B) Harnstoff-Aldehyd-Harze hergestellt unter Verwendung von Harnstoff, Isobutyraldehyd und Formaldehyd eingesetzt werden.

21. Silangruppenhaltige Zusammensetzungen nach mindestens einem der vorherigen Ansprüche,
**dadurch gekennzeichnet,**
**dass** als Komponente B) mindestens ein Keton-, Keton/Aldehyd-, Harnstoff/Aldehyd-Harz und/oder dessen hydriertes Folgeprodukt verwendet wird,
**gekennzeichnet durch**
• eine Hydroxylzahl zwischen 0 und 450 mg KOH/g, bevorzugt zwischen 0 und 375 mg KOH/g, besonders bevorzugt zwischen 0 und 350 mg KOH/g,
• eine Farbzahl nach Gardner (50 Gew.-% in Ethylacetat) zwischen 0 und 5, bevorzugt zwischen 0 und 3,0, besonders bevorzugt zwischen 0 und 2,0,
• eine Farbzahl nach Gardner (50 Gew.% in Ethylacetat) nach thermischer Belastung des Harzes (24 h, 150 °C) zwischen 0 und 10,0, bevorzugt zwischen 0 und 7,5, besonders bevorzugt zwischen 0 und 5,0,
• ein zahlenmittleres Molekulargewicht Mn von 300 bis 10 000 g/mol, bevorzugt von 400 bis 5 000 g/mol, besonders bevorzugt von 400 bis 3 000 g/mol,
• eine Polydispersität (Mw/Mn) zwischen 1,25 und 4,0, besonders bevorzugt zwischen 1,3 und 3,5,
• einen Schmelzpunkt/-bereich zwischen 20 und 180 °C, bevorzugt zwischen 30 und 140 °C, besonders bevorzugt zwischen 40 und 130 °C,
• eine Löslichkeit in unpolaren, organischen Lösemitteln.

22. Silangruppenhaltige Zusammensetzungen nach mindestens einem der vorherigen Ansprüche,
**dadurch gekennzeichnet,**
**dass** als Komponente B) mindestens ein Keton-, Keton/Aldehyd-, Harnstoff/Aldehyd-Harz und/oder dessen hydriertes Folgeprodukt verwendet wird, in Mengen von 1 bis 98 Gew.-%, bevorzugt 1 bis 49 Gew.%, besonders bevorzugt 1 bis 40 Gew.-%.

23. Silangruppenhaltige Zusammensetzungen nach einem der vorherigen Ansprüche,
**dadurch gekennzeichnet,**
**dass** organische Lösemittel als Komponente C) verwendet werden.

24. Silangruppenhaltige Zusammensetzungen nach einem der vorherigen Ansprüche,
**dadurch gekennzeichnet,**
**dass** aromatische, aliphatische und/oder cycloaliphatische Lösemittel ausgewählt aus Xylolen, Toluol, Benzol, Kresolen, Naphthalin, Tetrahydronaphthalin, Dekahydronaphthalin, Hexan, Heptan, (Methyl)Cyclohexan, Kristallölen, Spezial- und Testbenzinen, Terpentinen, Paraffinen allein oder in Mischung als Komponente C) verwendet werden.

25. Silangruppenhaltige Zusammensetzungen nach mindestens einem der vorherigen Ansprüche,
**dadurch gekennzeichnet,**
**dass** die Komponente C) in Mengen von 1 bis 98 Gew.-%, bevorzugt von 2 bis 98 Gew.%, besonders bevorzugt 20 bis 98 Gew.-% in der Zusammensetzung enthalten ist.

26. Silangruppenhaltige Zusammensetzungen nach einem der vorherigen Ansprüche,
**dadurch gekennzeichnet, dass** als Komponente D) Hilfs- und Zusatzstoffe verwendet werden.

27. Silangruppenhaltige Zusammensetzungen nach einem der vorherigen Ansprüche,
**dadurch gekennzeichnet,**
**dass** als Komponente D) Hilfs- und Zusatzstoffe, ausgewählt aus Inhibitoren, weiteren organischen Lösemitteln, Wasser, wasserabfangenden Substanzen, grenzflächenaktiven Substanzen, Entschäumern, Entlüftern, Gleit- und Verlaufmitteln, Substratnetzmitteln, Antiblockingagents, Sauerstoff- und/oder Radikalfängern, Katalysatoren, Lichtschutzmitteln, Farbaufhellern, Photosensibilisatoren und - initiatoren, Additiven zur Beeinflussung rheologischer Eigenschaften z. B. Thixotropiermittel und/oder Eindickungsmittel, Hautverhinderungsmitteln, Antistatika, Netz- und Dispergiermitteln, Vernetzern z. B. blockierte oder nicht blockierte (Poly)Isocyanate, Konservierungsmitteln z. B. Fungizide und/oder Biozide, thermoplastischen Additiven, Weichmachern, Mattierungsmitteln, Brandschutzmitteln, z. B. internen Trennmitteln, Treibmitteln, Farbstoffen, Pigmenten, Füllstoffen, nicht gepfropften, leicht hydrolysierbaren Silanen wie Hexadecyltrimethoxysilan oder Hexadecyltriethoxysilan, Polyurethanen, Polyacrylaten, Polyethern, Polyestern, Alkydharzen, Polyamiden, Casein, Celluloseethern, Derivaten der Cellulose, Polyvinylalkoholen und Derivaten der Polyvinylalkohole, Polyvinylacetaten, Polyvinylpyrolidonen, Kautschuken, Naturharzen, Kohlenwasserstoffharzen z. B Cumaron-, Inden-, Cyclopentadienharze, Terpenharzen, Maleinatharzen, Phenolharzen, Phenol-/Harnstoff-Aldehydharzen, Aminoplasten z. B. Melamin-, Benzoguanaminharze, Epoxyacrylaten, Epoxidharzen, Kieselsäureestern und Alkalisilikaten z. B. Wasserglas, Silikonharzen, fluorhaltigen Polymeren allein oder in Mischung verwendet werden.

28. Verfahren zur Herstellung von silangruppenhaltigen Zusammensetzungen nach einem der vorherigen Ansprüche,
im Wesentlichen enthaltend
A) 1 bis 98 Gew.% mindestens eines silangepfropften, weitgehend amorphen Poly-αolefins, das kein organisch gebundenes Chlor enthält und eine Schmelzenthalpie im Bereich von 0 bis 80 J/g aufweist
und
B) 1 bis 98 Gew.-% mindestens eines Keton-, Keton/Aldehyd-, Harnstoff/Aldehyd-Harzes und/oder dessen hydrierten Folgeproduktes
und
C) 1 bis 98 Gew.-% mindestens eines Lösemittels
und gegebenenfalls
D) bis zu 97 Gew.-% mindestens eines Hilfs- oder Zuschlagstoffes,
wobei die Summe der Gewichtsangaben der Komponenten A) bis D) 100 Gew.-% beträgt,
durch intensives Mischen und Homogenisieren durch Rühren und/oder Dispergieren der Komponenten A) bis D) bei Temperaturen von +20 bis +80 °C gegebenenfalls in Inertgasatmosphäre und unter Ausschluss von Wasser, wobei die Komponente C) vorgelegt und die Komponenten A), B) und gegebenenfalls D) zugegeben werden.

29. Verwendung der silangruppenhaltigen Zusammensetzungen nach mindestens einem der vorherigen Ansprüche als Primerzusammensetzungen zur Verbesserung der Haftung auf Kunststoffen.

30. Verwendung der silangruppenhaltigen Zusammensetzungen nach mindestens einem der vorherigen Ansprüche als Primerzusammensetzungen zur Verbesserung der Haftung auf unvorbehandelten Kunststoffen.

31. Verwendung der silangruppenhaltigen Zusammensetzungen nach mindestens einem der vorherigen Ansprüche als Primerzusammensetzungen zur Verbesserung der Haftung auf unvorbehandelten, niedrigenergetischen Kunststoffen, mit einer Oberflächenspannung unter 40, bevorzugt unter 38, besonders bevorzugt unter 34 mN/m².

32. Verwendung der silangruppenhaltigen Zusammensetzungen nach mindestens einem der vorherigen Ansprüche als Primerzusammensetzungen zur Verbesserung der Haftung auf unvorbehandelten, niedrigenergetischen Kunststoffen, ausgewählt aus Polypropylen (PP), modifiziertem Polypropylen, wie Polypropylen-ethylen-Copolymere (Blockcopolymere oder Randomcopolymere), Poly-1-buten, Polyethylen (PE), modifiziertem PE, Mischungen wie Polypropylen/Ethylen-Propylen-Dien-Blends (PP/EPDM) mit geringem EPDM-Gehalt, PP/PE-Blends, Kautschuken (Naturkautschuken, Butylkautschuken, Chloroprenkautschuken, Silikonkautschuken, EPM, EPDM, NBR, SBR, SBS, BR), Polyvinylchlorid sowie speziellen Polyestern.

33. Verwendung der silangruppenhaltigen Zusammensetzungen nach mindestens einem der vorherigen Ansprüche als Primerzusammensetzungen zur Verbesserung der Haftung auf Glas, Holz, Papier, Kartonagen aller Art, Faserplatten, Metallen (z. B. Eisen, Stahl, Edelstahl, Aluminium, Messing, Kupfer), Keramik oder Beton.

34. Verwendung der silangruppenhaltigen Zusammensetzungen nach einem der vorherigen Ansprüche als Primerzusammensetzungen,
**dadurch gekennzeichnet,**
**dass** wahlweise eine Vorbehandlung direkt nach der Herstellung des Kunststoffes beim Kunststoffhersteller (Off-line) oder aber direkt vor der Applikation des Beschichtungsstoffes (In-line) erfolgt.

35. Verwendung der silangruppenhaltigen Zusammensetzungen nach einem der vorherigen Ansprüche als Primerzusammensetzungen,
**dadurch gekennzeichnet,**
**dass** die Zusammensetzung mittels z. B. elektrostatischen Sprüh-, Spritzverfahren, Spincoaten, Gießen, Tauchen, Trommeln, Fluten, Walzen, Wischen, Waschen, Drucken, Rollen, Streichen, Extrudieren auf die Kunststoffsubstrate appliziert wird.

36. Verwendung der silangruppenhaltigen Zusammensetzungen nach einem der vorherigen Ansprüche als Primerzusammensetzungen,
**dadurch gekennzeichnet,**
**dass** auf die Primerschichten nachfolgende Kleb-, Dicht- und/oder Beschichtungsstoffe appliziert werden.

37. Verwendung der silangruppenhaltigen Zusammensetzungen nach einem der vorherigen Ansprüche als Primerzusammensetzungen,
**dadurch gekennzeichnet,**
**dass** die nachfolgende Schicht direkt *"nass-in-nass"* auf die Primerschicht appliziert wird, oder der Primer zunächst bei Raumtemperatur oder erhöhter Temperatur von den flüchtigen Bestandteilen befreit wird und dann die nachfolgende Schicht auf den "trocknen" - d. h. lösemittelfreien - Primer appliziert wird.

38. Verwendung der silangruppenhaltigen Zusammensetzungen nach einem der vorherigen Ansprüche als Primerzusammensetzungen,
**dadurch gekennzeichnet,**
**dass** die Schichtdicke der Primerschichten nach Abdampfen der flüchtigen Bestandteile zwischen 0,01 und 100 µm, bevorzugt 0,1 und 30 µm, besonders bevorzugt zwischen 0,2 und 10 µm liegt.

39. Verwendung der silangruppenhaltigen Zusammensetzungen nach einem der vorherigen Ansprüche als Primerzusammensetzungen,
**dadurch gekennzeichnet,**
**dass** als nachfolgende Systeme Dicht-, Kleb- und Beschichtungsstoffe eingesetzt werden ausgewählt aus lösemittelhaltigen und/oder wässrigen Systemen und/oder lösemittelfreien Systemen.

40. Verwendung der silangruppenhaltigen Zusammensetzungen nach einem der vorherigen Ansprüche als Primerzusammensetzungen,
**dadurch gekennzeichnet,**
**dass** als nachfolgende Systeme strahlenhärtbare Kleb-, Dicht-, Beschichtungsstoffe und/oder Pulverlacke eingesetzt werden.

41. Verwendung nach Anspruch 39 oder 40,
**dadurch gekennzeichnet,**
**dass** als nachfolgende Systeme Spachtelmassen, Füller, Basis- und/oder Decklacke, Druckfarben, Kugelschreiberpasten, Tinten, Polituren, Lasuren, Laminierungen, Heißsiegellacke, Kosmetikartikel und/oder Dicht- und Dämmstoffe sowie Klebstoffe eingesetzt werden.

42. Gegenstände hergestellt unter Verwendung silangruppenhaltiger Zusammensetzungen nach mindestens einem der vorherigen Ansprüche.

## Claims

1. Silane-group-containing composition containing no organically bound chlorine and substantially containing
A) 1% to 98% by weight of at least one silane-grafted, largely amorphous poly-α-olefin which contains no organically bound chlorine and has an enthalpy of fusion in the range from 0 to 80 J/g
and
B) 1% to 98% by weight of at least one ketone resin, ketone/aldehyde resin and/or urea/aldehyde resin and/or hydrogenated derivative thereof
and
C) 1% to 98% by weight of at least one solvent
and if desired
D) up to 97% by weight of at least one auxiliary or adjuvant,
the sum of the weight figures of components A) to D) being 100% by weight.

2. Silane-group-containing composition according to Claim 1, **characterized in that** atactic polypropylene, atactic poly-1-butene and/or copolymers and/or terpolymers of the following monomer composition
0% to 95%, preferably 3% to 95% by weight of one or more α-olefins having 4 to 20 carbon atoms,
5% to 100%, preferably 5% to 97% by weight of propene and
0% to 50%, preferably 0% to 20% by weight of ethene
are used to prepare component A).

3. Silane-group-containing composition according to at least one of the preceding claims, **characterized in that** 1-butene, 1-pentene, 1-hexene, 1-octene, 1-decene, 1-dodecene, 1-octadecene, 3-methyl-l-butene, a methylpentene such as 4-methyl-1-pentene, for example, a methylhexene or a methylheptene, alone or in a mixture, is used as α-olefin having 4 to 20 carbon atoms of component A).

4. Silane-group-containing composition according to at least one of the preceding claims, **characterized in that** a silane which carries three alkoxy groups joined directly to the silicon is used as silane for graft attachment to prepare component A).

5. Silane-group-containing composition according to at least one of the preceding claims, **characterized in that** vinyltrimethoxysilane (VTMO), vinyltriethoxysilane, vinyltris(2-methoxyethoxy)-silane, 3-methacryloyloxypropyltrimethoxysilane (MEMO), 3-methacryloyloxypropyltriethoxysilane, vinyldimethylmethoxysilane and vinylmethyldibutoxysilane, alone or in a mixture, are used.

6. Silane-group-containing composition according to at least one of the preceding claims, **characterized in that** the silane is used in amounts between 0.1% to 10%, preferably between 0.5 and 5%, by weight, based on the polyolefin.

7. Silane-group-containing composition according to at least one of the preceding claims, **characterized in that** at least one silane-grafted, largely amorphous poly-α-olefins containing no organically bound chlorine, **characterized by**
• a weight-average molecular weight of 2000 to 250 000 g/mol, preferably 3000 to 150 000 g/mol, more preferably 3000 to 125 000 g/mol,
• a polydispersity, PD, of 2.0 to 40, preferably 2.5 to 20, more preferably 2.5 to 15,
• a glass transition temperature, Tg, of -80 to 0°C, preferably -60 to 0°C, more preferably -55 to -10°C,
• an enthalpy of fusion in the range from 0 to 80 J/g, preferably in the range from 1 to 60 J/g, more preferably in the range from 1 to 40 J/g, and
• substantial solubility, determined by dissolving component A) in the respective solvent or solvent mixture in 10% or 50% dilution, with stirring at reflux temperature, and subsequently cooling the solution to room temperature, the solubility of component A) in xylene being between 80% and 99.9%, and/or swellability in apolar solvents
is used as component A).

8. Silane-group-containing composition according to at least one of the preceding claims, **characterized in that** at least one grafted, largely amorphous poly-α-olefin containing no organically bound chlorine is used as component A) in amounts of 1% to 98%, preferably 1% to 49%, more preferably 1% to 40% by weight.

9. Silane-group-containing composition according to at least one of the preceding claims, **characterized in that** C-H-acidic ketones are used to prepare the ketone resins and/or ketone-aldehyde resins (component B)).

10. Silane-group-containing composition according to at least one of the preceding claims, **characterized in that** ketones selected from acetone, acetophenone, methyl ethyl ketone, tert-butyl methyl ketone, heptan-2-one, pentan-3-one, methyl isobutyl ketone, cyclopentanone, cyclododecanone, mixtures of 2,2,4- and 2,4,4-trimethylcyclopentanone, cycloheptanone, cyclooctanone, cyclohexanone, 4-tert-amylcyclohexanone, 2-sec-butylcyclohexanone, 2-tert-butylcyclohexanone, 4-tert-butylcyclohexanone, 2-methylcyclohexanone, 3,3,5-trimethylcyclohexanone as starting compounds, alone or in mixtures, preferably acetophenone, cyclohexanone, 4-tert-butylcyclohexanone, 3,3,5-trimethylcyclohexanone and heptanone, alone or in a mixture, are used to prepare the ketone-aldehyde resins (component B)).

11. Silane-group-containing composition according to at least one of the preceding claims, **characterized in that** cyclohexanone is used to prepare the ketone resins (component B)).

12. Silane-group-containing composition according to at least one of the preceding claims, **characterized in that** aldehydes selected from formaldehyde, acetaldehyde, n-butyraldehyde and/or isobutyraldehyde, valeraldehyde and dodecanal, alone or in mixtures, are used to prepare the ketone-aldehyde resins (component B)).

13. Silane-group-containing composition according to at least one of the preceding claims, **characterized in that** formaldehyde and/or paraformaldehyde and/or trioxane is used as aldehyde component to prepare the ketone-aldehyde resins (component B)).

14. Silane-group-containing composition according to at least one of the preceding claims, **characterized in that** resins from acetophenone, cyclohexanone, 4-tert-butylcyclohexanone, 3,3,5-trimethylcyclohexanone, heptanone, alone or in a mixture, and formaldehyde are used as component B).

15. Silane-group-containing composition according to at least one of the preceding claims, **characterized in that** resins according to any of Claims 9 to 14 hydrogenated following preparation are used as component B).

16. Silane-group-containing composition according to the preceding claim, **characterized in that** hydrogenated derivatives of the resins composed of acetophenone, cyclohexanone, 4-tert-butylcyclohexanone, 3,3,5-trimethylcyclohexanone, heptanone, alone or in a mixture, and formaldehyde are used as component B).

17. Silane-group-containing composition according to at least one of the preceding claims, **characterized in that** urea-aldehyde resins prepared using a urea of the general formula (i) 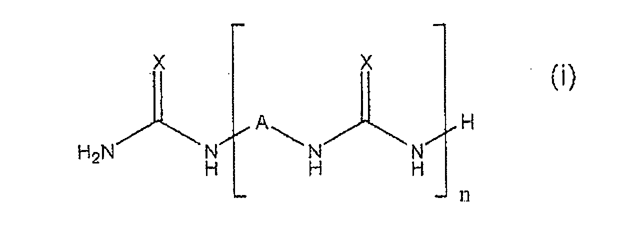 in which X is oxygen, A is an alkylene radical and n is 0 to 3 with 1.9 (n + 1) to 2.2 (n + 1) mol of an aldehyde of the general formula (ii) 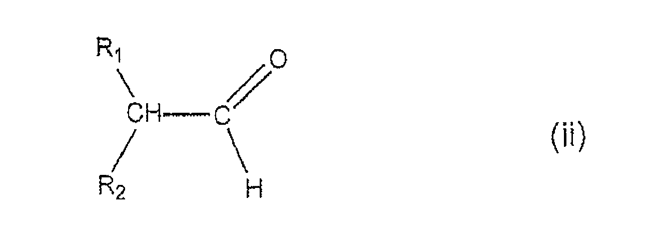 in which R₁ and R₂ stand for hydrocarbon radicals having in each case up to 20 carbon atoms, and/or formaldehyde, are used as component B).

18. Silane-group-containing composition according to at least one of the preceding claims, **characterized in that** urea-aldehyde resins prepared using urea, thiourea, methylenediurea, ethylenediurea, tetramethylenediurea and/or hexamethylenediurea or mixtures thereof are used as component B).

19. Silane-group-containing composition according to at least one of the preceding claims, **characterized in that** urea-aldehyde resins prepared using isobutyraldehyde, formaldehyde, 2-methylpentanal, 2-ethylhexanal and 2-phenylpropanal or mixtures thereof are used as component B).

20. Silane-group-containing composition according to at least one of the preceding claims, **characterized in that** urea-aldehyde resins prepared using urea, isobutyraldehyde and formaldehyde are used as component B).

21. Silane-group-containing composition according to at least one of the preceding claims, **characterized in that** at least one ketone resin, ketone/aldehyde resin, urea/aldehyde resin and/or hydrogenated derivative thereof, **characterized by**
• a hydroxyl number between 0 and 450 mg KOH/g, preferably between 0 and 375 mg KOH/g, more preferably between 0 and 350 mg KOH/g,
• a Gardner colour number (50% by weight in ethyl acetate) between 0 and 5, preferably between 0 and 3.0, more preferably between 0 and 2.0,
• a Gardner colour number (50% by weight in ethyl acetate) after thermal exposure of the resin (24 h, 150°C) between 0 and 10.0, preferably between 0 and 7.5, more preferably between 0 and 5.0,
• a number-average molecular weight, Mn, of 300 to 10 000 g/mol, preferably of 400 to 5000 g/mol, more preferably of 400 to 3000 g/mol,
• a polydispersity (Mw/Mn) between 1.25 and 4.0, more preferably between 1.3 and 3.5,
• a melting point/range between 20 and 180°C, preferably between 30 and 140°C, more preferably between 40 and 130°C
and
• solubility in apolar organic solvents, is used as component B).

22. Silane-group-containing composition according to at least one of the preceding claims, **characterized in that** at least one ketone resin, ketone/aldehyde resin, urea/aldehyde resin and/or hydrogenated derivative thereof, in amounts of 1% to 98%, preferably 1% to 49%, more preferably 1% to 40% by weight, is used as component B).

23. Silane-group-containing composition according to any one of the preceding claims, **characterized in that** organic solvents are used as component C).

24. Silane-group-containing composition according to any one of the preceding claims, **characterized in that** aromatic, aliphatic and/or cycloaliphatic solvents selected from xylenes, toluene, benzene, cresols, naphthalene, tetrahydronaphthalene, decahydronaphthalene, hexane, heptane, (methyl)cyclohexane, Kristalloels, special-boiling-point spirits, white spirits, terpentines, paraffins, alone or in a mixture, are used as component C).

25. Silane-group-containing composition according to at least one of the preceding claims, **characterized in that** component C) is present in amounts of 1% to 98%, preferably of 2% to 98%, more preferably 20% to 98% by weight in the composition.

26. Silane-group-containing composition according to any one of the preceding claims, **characterized in that** auxiliaries and additives are used as component D).

27. Silane-group-containing composition according to any one of the preceding claims, **characterized in that** auxiliaries and additives selected from inhibitors, further organic solvents, water, water-scavenging substances, surface-active substances, defoamers, deaerating agents, lubricants, flow control agents, substrate wetting agents, antiblocking agents, oxygen scavengers, free-radical scavengers, catalysts, light stabilizers, colour brighteners, photosensitizers, photoinitiators, rheological additives, for example thixotropic agents and/or thickening agents, antiskinning agents, antistats, wetting agents, dispersants, crosslinkers, for example blocked or non-blocked (poly)isocyanates, preservatives, for example fungicides and/or biocides, thermoplastic additives, plasticizers, matting agents, flame retardants, for example internal release agents, blowing agents, dyes, pigments, fillers, ungrafted, readily hydrolysable silanes such as hexadecyltrimethoxysilane or hexadecyltriethoxysilane, polyurethanes, polyacrylates, polyethers, polyesters, alkyd resins, polyamides, casein, cellulose ethers, cellulose derivatives, polyvinyl alcohols and polyvinyl alcohol derivatives, polyvinyl acetates, polyvinylpyrrolidones, rubbers, natural resins, hydrocarbon resins, for example coumarone, indene and cyclopentadiene resins, terpene resins, maleate resins, phenolic resins, phenol/urea-aldehyde resins, amino resins, for example melamine resins, benzoguanamine resins, epoxy acrylates, epoxy resins, silicic esters and alkali metal silicates, for example waterglass, silicone resins, fluorine-containing polymers, alone or in a mixture, are used as component D).

28. Process for preparing a silane-group-containing composition according to any one of the preceding claims, substantially containing
A) 1% to 98% by weight of at least one silane-grafted, largely amorphous poly-α-olefin which contains no organically bound chlorine and has an enthalpy of fusion in the range from 0 to 80 J/g
and
B) 1% to 98% by weight of at least one ketone resin, ketone/aldehyde resin and/or urea/aldehyde resin and/or hydrogenated derivative thereof
and
C) 1% to 98% by weight of at least one solvent and if desired
D) up to 97% by weight of at least one auxiliary or adjuvant,
the sum of the weight figures of components A) to D) being 100% by weight, by intensely mixing and homogenizing components A) to D) by stirring and/or dispersing at temperatures of +20 to +80°C, if desired in an inert-gas atmosphere and with exclusion of water, component C) being introduced initially and components A), B) and, if desired, D) being added.

29. Use of a silane-group-containing composition according to at least one of the preceding claims as a primer composition to promote adhesion to plastic.

30. Use of a silane-group-containing composition according to at least one of the preceding claims as a primer composition to promote adhesion to unpretreated plastic.

31. Use of a silane-group-containing composition according to at least one of the preceding claims as a primer composition to promote adhesion to unpretreated, low-energy plastic, having a surface tension below 40, preferably below 38, more preferably below 34 mN/m².

32. Use of a silane-group-containing composition according to at least one of the preceding claims as a primer composition to promote adhesion to unpretreated, low-energy plastic selected from polypropylene (PP), modified polypropylene such as polypropylene-ethylene copolymers (e.g. block copolymers or random copolymers), poly-1-butene, polyethylene (PE), modified PE, polypropylene/ethylene-propylene-diene blends (PP/EPDM) having a low EPDM content, PP/PE blends, rubbers (natural rubbers, butyl rubbers, chloroprene rubbers, silicone rubbers, EPM, EPDM, NBR, SBR, SBS, BR), polyvinyl chloride and specific polyesters.

33. Use of a silane-group-containing composition according to at least one of the preceding claims as a primer composition to promote adhesion to glass, wood, paper, cardboard packaging of all kinds, fibreboard, metals (e.g. iron, steel, stainless steel, aluminium, brass, copper), ceramic or concrete.

34. Use of a silane-group-containing composition according to any one of the preceding claims as a primer composition, **characterized in that** optionally pretreatment takes place directly after the production of the plastic at the premises of the plastics manufacturer (off-line) or else directly prior to the application of the coating material (in-line).

35. Use of a silane-group-containing composition according to any one of the preceding claims as a primer composition, **characterized in that** the composition is applied to the plastics substrate by means of, for example electrostatic spraying methods, injecting methods, spincoating, pouring, dipping, drumming, flooding, rolling, wiping, washing, printing, roller coating, spreading or extruding.

36. Use of a silane-group-containing composition according to any one of the preceding claims as a primer composition, **characterized in that** subsequent adhesives, sealants and/or coating materials are applied to the primer coats.

37. Use of a silane-group-containing composition according to any one of the preceding claims as a primer composition, **characterized in that** the subsequent coat is applied directly *wet-on-wet* to the primer coat, or the primer is first freed from the volatile constituents, at room temperature or at elevated temperature, and then the subsequent coat is applied to the "dry" - i.e. solvent-free - primer.

38. Use of a silane-group-containing composition according to any one of the preceding claims as a primer composition, **characterized in that** the thickness of the primer coats after the volatile constituents have evaporated is between 0.01 and 100 µm, preferably 0.1 and 30 µm, more preferably between 0.2 and 10 µm.

39. Use of a silane-group-containing composition according to any one of the preceding claims as a primer composition, **characterized in that** sealants, adhesives and coating materials selected from solvent-containing and/or aqueous systems and/or solvent-free systems are used as subsequent systems.

40. Use of a silane-group-containing composition according to any one of the preceding claims as a primer composition, **characterized in that** radiation-curable adhesives, sealants and coating materials and/or powder coating materials are used as subsequent systems.

41. Use according to Claim 39 or 40, **characterized in that** trowelling compounds, surfacers, basecoat materials, topcoat materials, printing inks, ballpoint pen pastes, inks, polishes, glazes, lamination systems, heat-seal lacquers, cosmetics articles, sealants and insulants and also adhesives are used as subsequent systems.

42. Article produced using a silane-group-containing composition according to at least one of the preceding claims.

## Revendications

1. Compositions contenant des groupes silane, qui ne contiennent pas de chlore organiquement lié, contenant essentiellement
A) 1 à 98% en poids d'au moins une poly-α-oléfine, dans une large mesure amorphe, greffée avec du silane, qui ne contient pas de chlore organiquement lié et qui présente une enthalpie de fusion dans la plage de 0 à 80 J/g et
B) 1 à 98% en poids d'au moins une résine de cétone, de cétone/aldéhyde et/ou d'urée/aldéhyde et/ou de ses dérivés hydrogénés et
C) 1 à 98% en poids d'au moins un solvant et le cas échéant
D) jusqu'à 97% en poids d'au moins un adjuvant ou additif,
la somme des indications pondérales des composants A) à
D) étant de 100% en poids.

2. Compositions contenant des groupes silane selon la revendication 1, **caractérisées en ce qu'**on utilise pour la préparation du composant A) du polypropylène atactique, du poly-1-butène atactique et/ou des copolymères et/ou des terpolymères présentant la composition en monomères suivante
0 à 95% en poids, de préférence 3 à 95% en poids, d'une ou de plusieurs α-oléfines comprenant 4 à 20 atomes de carbone,
5 à 100% en poids, de préférence 5 à 97% en poids de propylène et
0 à 50% en poids, de préférence 0 à 20% en poids d'éthylène.

3. Compositions contenant des groupes silane selon au moins l'une quelconque des revendications précédentes, **caractérisées en ce qu'**on utilise comme α-oléfines comprenant 4 à 20 atomes de carbone du composant A) du 1-butène, du 1-pentène, du 1-hexène, du 1-octène, du 1-décène, du 1-dodécène, du 1-octadécène, du 3-méthyl-1-butène, un méthylpentène tel que par exemple du 4-méthyl-1-pentène, un méthylhexène ou un méthylheptène, seuls ou en mélange.

4. Compositions contenant des groupes silane selon au moins l'une quelconque des revendications précédentes, **caractérisées en ce qu'**on utilise comme silane à greffer pour la préparation du composant A) un silane qui porte trois groupes alcoxy directement liés au silicium.

5. Compositions contenant des groupes silane selon au moins l'une quelconque des revendications précédentes, **caractérisées en ce qu'**on utilise du vinyltriméthoxysilane (VTMO), du vinyltriéthoxysilane, du vinyltris(2-méthoxyéthoxy)silane, du 3-méthacryloxypropyltriméthoxysilane (MEMO), du 3-méthacryloxypropyltriéthoxysilane, du vinyldiméthylméthoxysilane et du vinylméthyldibutoxysilane, seuls ou en mélange.

6. Compositions contenant des groupes silane selon au moins l'une quelconque des revendications précédentes, **caractérisées en ce que** le silane est utilisé en des quantités entre 0, 1 et 10% en poids, de préférence entre 0,5 et 5% en poids, par rapport à la polyoléfine.

7. Compositions contenant des groupes silane selon au moins l'une quelconque des revendications précédentes, **caractérisées en ce qu'**on utilise comme composant A) au moins une poly-α-oléfine, dans une large mesure amorphe, greffée avec du silane, qui ne contient pas de chlore organiquement lié et qui présente une enthalpie de fusion dans la plage de 0 à 80 J/g, **caractérisée par**
- un poids moléculaire pondéral moyen de 2000 à 250 000 g/mole, de préférence de 3000 à 150 000 g/mole, de manière particulièrement préférée de 3000 à 125 000 g/mole,
- une polydispersité PD de 2,0 à 40, de préférence 2,5 à 20, de manière particulièrement préférée de 2,5 à 15,
- une température de transition vitreuse Tg de -80 à 0°C, de préférence de -60 à 0°C, de manière particulièrement préférée de -55 à -10°C,
- une enthalpie de fusion dans la plage de 0 à 80 J/g, de préférence dans la plage de 1 à 60 J/g, de manière particulièrement préférée dans la plage de 1 à 40 J/g ainsi que
- une large solubilité, déterminée par la dissolution du composant A) dans un solvant ou un mélange de solvants en une dilution de 10 ou 50% sous agitation à la température de reflux et refroidissement consécutif de la solution à température ambiante, la solubilité du composant A) dans le xylène étant située entre 80 et 99,9%, et/ou une aptitude au gonflement dans des solvants non polaires.

8. Compositions contenant des groupes silane selon au moins l'une quelconque des revendications précédentes, **caractérisées en ce qu'**on utilise comme composant A) au moins une poly-α-oléfine, dans une large mesure amorphe, greffée, qui ne contient pas de chlore organiquement lié, en des quantités de 1 à 98% en poids, de préférence de 1 à 49% en poids, de manière particulièrement préférée de 1 à 40% en poids.

9. Compositions contenant des groupes silane selon au moins l'une quelconque des revendications précédentes, **caractérisées en ce qu'**on utilise pour la préparation des résines de cétone et/ou des résines de cétone-aldéhyde (composant B)) des cétones à fonction CH-acide.

10. Compositions contenant des groupes silane selon au moins l'une quelconque des revendications précédentes, **caractérisées en ce qu'**on utilise pour la préparation des résines de cétone-aldéhyde (composant B)), des cétones choisies parmi l'acétone, l'acétophénone, la méthyléthylcétone, la tert-butylméthylcétone, l'heptanone-2, la pentanone-3, la méthylisobutylcétone, la cyclopentanone, la cyclododécanone, les mélanges de 2,2,4-triméthylcyclopentanone et de 2,4,4-triméthylcyclopentanone, la cycloheptanone, la cyclooctanone, la cyclohexanone, la 4-tert-amylcyclohexanone, la 2-sec-butylcyclohexanone, la 2-tert-butylcyclohexanone, la 4-tert-butylcyclohexanone, la 2-méthylcyclohexanone, la 3,3,5-triméthylcyclohexanone comme composés de départ, seules ou dans des mélanges, de préférence l'acétophénone, la cyclohexanone, la 4-tert-butylcyclohexanone, la 3,3,5-triméthylcyclohexanone et l'heptanone, seules ou en mélange.

11. Compositions contenant des groupes silane selon au moins l'une quelconque des revendications précédentes, **caractérisées en ce qu'**on utilise pour la préparation des résines de cétone (composant B)) de la cyclohexanone.

12. Compositions contenant des groupes silane selon au moins l'une quelconque des revendications précédentes, **caractérisées en ce qu'**on utilise pour la préparation des résines de cétone-aldéhyde (composant B)) des aldéhydes choisis parmi le formaldéhyde, l'acétaldéhyde, le n-butyraldéhyde et/ou l'isobutyraldéhyde, le valérianaldéhyde, le dodécanal, seuls ou dans des mélanges.

13. Compositions contenant des groupes silane selon au moins l'une quelconque des revendications précédentes, **caractérisées en ce qu'**on utilise comme composant aldéhyde pour la préparation des résines de cétone-aldéhyde (composant B)) du formaldéhyde et/ou du paraformaldéhyde et/ou du trioxane.

14. Compositions contenant des groupes silane selon au moins l'une quelconque des revendications précédentes, **caractérisées en ce qu'**on utilise comme composant B) des résines d'acétophénone, de cyclohexanone, de 4-tert-butylcyclohexanone, de 3,3,5-triméthylcyclohexanone, d'heptanone, seules ou en mélange et de formaldéhyde.

15. Compositions contenant des groupes silane selon au moins l'une quelconque des revendications précédentes, **caractérisées en ce qu'**on utilise comme composant B) des résines selon les revendications 9 à 14, qui ont été hydrolysées après la préparation.

16. Compositions contenant des groupes silane selon la revendication précédente, **caractérisées en ce qu'**on utilise comme composant B) des dérivés hydrogénés des résines constituées par de l'acétophénone, de la cyclohexanone, de la 4-tert-butylcyclohexanone, de la 3,3,5-triméthylcyclohexanone, de l'heptanone, seules ou en mélange et du formaldéhyde.

17. Compositions contenant des groupes silane selon au moins l'une quelconque des revendications précédentes, **caractérisées en ce qu'**on utilise comme composant B) des résines d'urée-aldéhyde, préparées en utilisant une urée de formule générale (i) 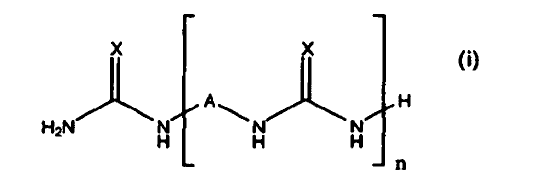 dans laquelle X signifie oxygène, A signifie un radical alkylène et n représente 0 à 3, avec 1,9 (n + 1) à 2,2 (n + 1) moles d'un aldéhyde de formule générale (ii) 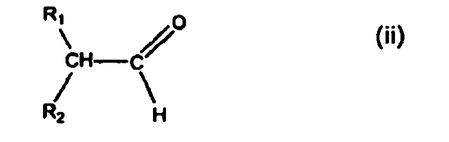 dans laquelle R₁ et R₂ représentent des radicaux hydrocarbonés comprenant à chaque fois jusqu'à 20 atomes de carbone,
et/ou du formaldéhyde.

18. Compositions contenant des groupes silane selon au moins l'une quelconque des revendications précédentes, **caractérisées en ce qu'**on utilise comme composant B) des résines d'urée-aldéhyde, préparées en utilisant de l'urée, de la thio-urée, de la méthylènediurée, de l'éthylènediurée, de la tétraméthylènediurée et/ou de l'hexaméthylènediurée ou leurs mélanges.

19. Compositions contenant des groupes silane selon au moins l'une quelconque des revendications précédentes, **caractérisées en ce qu'**on utilise comme composant B) des résines d'urée-aldéhyde, préparées en utilisant de l'isobutyraldéhyde, du formaldéhyde, du 2-méthylpentanal, du 2-éthylhexanal et du 2-phénylpropanal ou leurs mélanges.

20. Compositions contenant des groupes silane selon au moins l'une quelconque des revendications précédentes, **caractérisées en ce qu'**on utilise comme composant B) des résines d'urée-aldéhyde, préparées en utilisant de l'urée, de l'isobutyraldéhyde et du formaldéhyde.

21. Compositions contenant des groupes silane selon au moins l'une quelconque des revendications précédentes, **caractérisées en ce qu'**on utilise comme composant B) au moins une résine de cétone, de cétone/aldéhyde, d'urée/aldéhyde et/ou son dérivé hydrogéné, **caractérisée par**
- un indice hydroxyle entre 0 et 450 mg de KOH/g, de préférence entre 0 et 375 mg de KOH/g, de manière particulièrement préférée entre 0 et 350 mg de KOH/g,
- un indice de couleur selon Gardner (50% en poids dans de l'acétate d'éthyle) entre 0 et 5, de préférence entre 0 et 3,0, de manière particulièrement préférée entre 0 et 2,0,
- un indice de couleur selon Gardner (50% en poids dans de l'acétate d'éthyle) après sollicitation thermique de la résine (24 h, 150°C) entre 0 et 10,0, de préférence entre 0 et 7,5, de manière particulièrement préférée entre 0 et 5,0,
- un poids moléculaire numérique moyen Mn de 300 à 10 000 g/mole, de préférence de 400 à 5000 g/mole, de manière particulièrement préférée de 400 à 3000 g/mole,
- une polydispersité (Mw/Mn) entre 1,25 et 4,0, de manière particulièrement préférée entre 1,3 et 3,5,
- un point/une plage de fusion entre 20 et 180°C, de préférence entre 30 et 140°C, de manière particulièrement préférée entre 40 et 130°C.
- une solubilité dans des solvants non polaires, organiques.

22. Compositions contenant des groupes silane selon au moins l'une quelconque des revendications précédentes, **caractérisées en ce qu'**on utilise comme composant B) au moins une résine de cétone, de cétone/aldéhyde, d'urée/aldéhyde et/ou son dérivé hydrogéné, en des quantités de 1 à 98% en poids, de préférence de 1 à 49% en poids, de manière particulièrement préférée de 1 à 40% en poids.

23. Compositions contenant des groupes silane selon l'une quelconque des revendications précédentes, **caractérisées en ce qu'**on utilise des solvants organiques comme composant C).

24. Compositions contenant des groupes silane selon l'une quelconque des revendications précédentes, **caractérisées en ce qu'**on utilise des solvants aromatiques, aliphatiques et/ou cycloaliphatiques choisis parmi les xylènes, le toluène, le benzène, les crésols, le naphtalène, le tétrahydronaphtalène, le décahydronaphtalène, l'hexane, l'heptane, le (méthyl)cyclohexane, le white-spirit, les essences spéciales et minérales, les térébenthines, les paraffines, seuls ou en mélange, comme composant C).

25. Compositions contenant des groupes silane selon au moins l'une quelconque des revendications précédentes, **caractérisées en ce que** le composant C) est contenu dans la composition en des quantités de 1 à 98% en poids, de préférence de 2 à 98% en poids, de manière particulièrement préférée de 20 à 98%.

26. Compositions contenant des groupes silane selon l'une quelconque des revendications précédentes, **caractérisées en ce qu'**on utilise comme composant D) des adjuvants et des additifs.

27. Compositions contenant des groupes silane selon l'une quelconque des revendications précédentes, **caractérisées en ce qu'**on utilise comme composant D) des adjuvants et des additifs, choisis parmi les inhibiteurs, d'autres solvants organiques, l'eau, les substances captant l'eau, les substances tensioactives, les antimousses, les agents de désaération, les agents lubrifiants et d'étalement, les agents mouillants des substrats, les agents antiadhésifs, les pièges à oxygène et/ou à radicaux, les catalyseurs, les agents de protection contre la lumière, les azurants, les agents de photosensibilisation et les photo-initiateurs, les additifs pour influencer les propriétés rhéologiques, par exemple les agents thixotropiques et/ou les épaississants, les agents de diminution de la croûte, les antistatiques, les mouillants et les dispersants, les réticulants, par exemple les (poly)isocyanates bloqués ou non bloqués, les agents de conservation, par exemple les fongicides et/ou les biocides, les additifs thermoplastiques, les plastifiants, les agents de matage, les agents ignifuges, par exemple les agents de démoulage internes, les agents gonflants, les colorants, les pigments, les charges, les silanes non greffés, facilement hydrolysables tels que l'hexadécyltriméthoxysilane ou l'hexadécyltriéthoxysilane, les polyuréthanes, les polyacrylates, les polyéthers, les polyesters, les résines alkyde, les polyamides, la caséine, les éthers de cellulose, les dérivés de la cellulose, les poly(alcools vinyliques) et les dérivés des poly(alcools vinyliques), les poly(acétates de vinyle), les polyvinylpyrrolidones, les caoutchoucs, les résines naturelles, les résines hydrocarbonées, par exemple les résines de coumarone, d'indène, de cyclopentadiène, les résines terpéniques, les résines de maléinate, les résines phénoliques, les résines de phénol/urée-aldéhyde, les aminoplastes, par exemple les résines de mélamine, de benzoguanamine, les époxyacrylates, les résines d'époxyde, les esters de silice et les silicates de métal alcalin, par exemple le verre soluble, les résines de silicone, les polymères fluorés, seuls ou en mélange.

28. Procédé pour la préparation de compositions contenant des groupes silane selon l'une quelconque des revendications précédentes, contenant essentiellement
A) 1 à 98% en poids d'au moins une poly-α-oléfine, dans une large mesure amorphe, greffée avec du silane, qui ne contient pas de chlore organiquement lié et qui présente une enthalpie de fusion dans la plage de 0 à 80 J/g et
B) 1 à 98% en poids d'au moins une résine de cétone, de cétone/aldéhyde, d'urée/aldéhyde et/ou de ses dérivés hydrogénés et
C) 1 à 98% en poids d'au moins un solvant et le cas échéant
D) jusqu'à 97% en poids d'au moins un adjuvant ou additif,
la somme des indications pondérales des composants A) à
D) étant de 100% en poids,
par mélange intensif et homogénéisation intensive par agitation et/ou dispersion des composants A) à D) à des températures de +20 à +80°C, le cas échéant dans une atmosphère de gaz inerte et à l'abri de l'eau, le composant C) étant disposé au préalable et les composants A), B) et le cas échéant D) étant ajoutés.

29. Utilisation des compositions contenant des groupes silane selon au moins l'une quelconque des revendications précédentes comme compositions d'apprêt pour améliorer l'adhérence sur des matériaux synthétiques.

30. Utilisation des compositions contenant des groupes silane selon au moins l'une quelconque des revendications précédentes comme compositions d'apprêt pour améliorer l'adhérence sur des matériaux synthétiques non prétraités.

31. Utilisation des compositions contenant des groupes silane selon au moins l'une quelconque des revendications précédentes comme compositions d'apprêt pour améliorer l'adhérence sur des matériaux synthétiques non prétraités, de faible énergie, présentant une tension superficielle inférieure à 40, de préférence inférieure à 38, de manière particulièrement préférée inférieure à 34 mN/m².

32. Utilisation des compositions contenant des groupes silane selon au moins l'une quelconque des revendications précédentes comme compositions d'apprêt pour améliorer l'adhérence sur des matériaux synthétiques non prétraités, de faible énergie, choisis parmi le polypropylène (PP), le polypropylène modifié, tel que les copolymères de polypropylène-éthylène (copolymères à blocs ou statistiques), le poly-1-butène, le polyéthylène (PE), le PE modifié, les mélanges tels que les compounds de polypropylène/éthylène-propylène-diène (PP/EPDM) avec une faible teneur en EPDM, les compounds de PP/PE, les caoutchoucs (caoutchoucs naturels, de butyle, de chloroprène, de silicone, EPM, EPDM, NBR, SBR, SBS, BR), le poly(chlorure de vinyle) ainsi que les polyesters spéciaux.

33. Utilisation des compositions contenant des groupes silane selon au moins l'une quelconque des revendications précédentes comme compositions d'apprêt pour améliorer l'adhérence sur le verre, le bois, le papier, les cartons de tous types, les plaques de fibres, les métaux (par exemple le fer, l'acier, l'acier noble, l'aluminium, le laiton, le cuivre), la céramique ou le béton.

34. Utilisation des compositions contenant des groupes silane selon l'une quelconque des revendications précédentes comme compositions d'apprêt, **caractérisée en ce qu'**un prétraitement est effectué, au choix, directement après la préparation du matériau synthétique chez le fabricant des matériaux synthétiques (hors ligne) ou juste avant l'application de la substance de revêtement (en ligne).

35. Utilisation des compositions contenant des groupes silane selon l'une quelconque des revendications précédentes comme compositions d'apprêt, **caractérisée en ce que** la composition est appliquée par exemple par des procédés de pulvérisation d'injection électrostatiques, de dépôt à la tournette, de coulage, d'immersion, dans un tambour, au trempé, de laminage, à l'éponge, de lavage, d'impression, au rouleau, d'enduction, d'extrusion sur les substrats en matériau synthétique.

36. Utilisation des compositions contenant des groupes silane selon l'une quelconque des revendications précédentes comme compositions d'apprêt, **caractérisée en ce qu'**on applique sur les couches d'apprêt des adhésifs, des substances d'étanchéité et/ou de revêtement consécutives.

37. Utilisation des compositions contenant des groupes silane selon l'une quelconque des revendications précédentes comme compositions d'apprêt, **caractérisée en ce que** la couche consécutive est appliquée directement "humide sur humide" sur la couche d'apprêt ou l'apprêt est d'abord libéré des constituants volatils à température ambiante ou à température plus élevée puis la couche consécutive est appliquée sur l'apprêt "sec", c'est-à-dire exempt de solvants.

38. Utilisation des compositions contenant des groupes silane selon l'une quelconque des revendications précédentes comme compositions d'apprêt, **caractérisée en ce que** l'épaisseur des couches d'apprêt après l'évaporation des constituants volatils est comprise entre 0,01 et 100 µm, de préférence entre 0,1 et 30 µm, de manière particulièrement préférée entre 0,2 et 10 µm.

39. Utilisation des compositions contenant des groupes silane selon l'une quelconque des revendications précédentes comme compositions d'apprêt, **caractérisée en ce qu'**on utilise comme systèmes consécutifs des substances d'étanchéité, des adhésifs et des substances de revêtement choisi(e)s parmi les systèmes contenant des solvants et/ou aqueux et/ou exempts de solvants.

40. Utilisation des compositions contenant des groupes silane selon l'une quelconque des revendications précédentes comme compositions d'apprêt, **caractérisée en ce qu'**on utilise comme systèmes consécutifs des adhésifs, des substances d'étanchéité, des substances de revêtement et/ou des laques en poudre durcissables par un rayonnement.

41. Utilisation selon la revendication 39 ou 40, **caractérisée en ce qu'**on utilise comme systèmes consécutifs des enduits, des charges, des laques de base et/ou de recouvrement, des encres d'imprimerie, des pâtes pour stylo à bille, des teintures, des produits à polir, des peintures transparentes, des laminages, des laques de scellage à chaud, des produits cosmétiques et/ou des substances d'étanchéité et d'isolation ainsi que des adhésifs.

42. Objets préparés en utilisant des compositions contenant des groupes silane selon au moins l'une quelconque des revendications précédentes.
